# EUROPEAN PATENT APPLICATION

(11) **EP 4 757 464 A1**
(43) Date of publication of application: **10.06.2026**
(21) Application number: 24863166.5
(22) Date of filing: 03.09.2024
(51) Int. Cl.: H04W 72/1268, H04W 76/14, H04W 8/00, H04W 52/02, H04W 84/12, H04W 72/1263

(54) **ELECTRONIC DEVICE FOR PERFORMING SCHEDULING OF NAN COMMUNICATION AND WIRELESS LAN COMMUNICATION, AND OPERATING METHOD OF ELECTRONIC DEVICE**

(30) Priority: 06.09.2023 KR 20230118128; 07.12.2023 KR 20230176531
(71) Applicant: Samsung Electronics Co., Ltd., Suwon-si, Gyeonggi-do 16677 (KR)
(72) Inventor: KIM, Junsung, Suwon-si, Gyeonggi-do 16677 (KR); JUNG, Buseop, Suwon-si, Gyeonggi-do 16677 (KR)
(74) Representative: HGF
(86) International application number: PCT/KR2024/013266
(87) International publication number: WO 2025/053585

(57) **Abstract**

In an electronic device and an operating method of the electronic device, according to an embodiment, the electronic device may comprise a communication circuit supporting short-range wireless communication and neighbor awareness network (NAN) communication. The electronic device may comprise a processor. The processor may perform a connection to a second external electronic device through the NAN communication while being connected to a first external electronic device through the short-range wireless communication. The processor may perform the NAN communication with the second external electronic device on the basis of first schedule information related to a first duration set between at least one discovery window set in an NAN cluster to which the electronic device belongs, and perform the short-range wireless communication with the first external electronic device in a second duration set between the at least one discovery window and the first duration. Upon receiving second schedule information of the short-range wireless communication for deactivating the short-range wireless communication in a partial duration of the second duration, the processor may generate third schedule information for performing the NAN communication in the partial duration on the basis of the second schedule information. The processor may transmit the third schedule information to the second external electronic device.

## Description

### [Technical Field]

The disclosure relates to an electronic device and an operating method thereof, and to an electronic device that performs scheduling of neighbor awareness networking (NAN) communication and wireless LAN communication.

### [Background Art]

With the widespread distribution of various electronic devices, there has been implementation of increased speeds in wireless communications for such devices.

Furthermore, various types of proximity services utilizing low-power discovery technologies have been developed recently. For instance, proximity services (or proximity communication services) are being implemented to enable rapid data exchange between adjacent electronic devices via proximity networks. Such proximity services may include low-power proximity services utilizing Bluetooth low energy (BLE) beacons or based on low-power short-range communication technologies (e.g., neighbor awareness networking (NAN) or Wi-Fi aware) (hereinafter referred to as 'NAN') based on wireless local area network (WLAN).

According to an embodiment, a NAN-based low-power proximity service (hereinafter referred to as a 'proximity service') refers to a service that utilizes a proximity network dynamically reconfigured according to the movement of electronic devices, wherein a set of electronic devices forming the proximity network may be referred to as a cluster. In the proximity service, the electronic devices included in the cluster may transmit and receive signals for discovery (e.g., beacons) and service discovery frames (SDFs) (hereinafter referred to as 'SDFs') within a synchronized time duration (or communication interval). For example, at least one electronic device within the cluster may transmit a signal to notify the presence of the cluster, and a new electronic device attempting to join the cluster may receive the signal.

To reduce current consumption (or power consumption), each electronic device within the cluster may configure different active durations capable of transmitting and receiving signals. In NAN communication, such an active duration allowing signal transmission and reception may be referred to as a discovery window (DW). Furthermore, the electronic devices included in the cluster may reduce power consumption by maintaining a low-power state (e.g., a sleep state) during a duration (or interval) other than the discovery window.

### [Disclosure of Invention]

### [Technical Problem]

When the size of data to be transmitted or received via NAN communication is relatively large, the electronic device may not complete transmission and/or reception of the data within the discovery window. In this case, the electronic device may transmit and/or receive the relatively large data in an interval other than the discovery window. If both NAN communication and another short-range wireless communication are activated, the electronic device may need to perform another short-range wireless communication as well as NAN communication during the interval between the discovery windows. In this case, the electronic device may perform scheduling for an interval for NAN communication and another interval for another short-range wireless communication between the discovery windows. If a function (e.g., target wake time (TWT) or notice of absence (NoA)) that deactivates short-range wireless communication in a partial interval of the interval available for another short-range wireless communication is activated, the partial interval may be in a state where any communication (e.g., NAN communication) other than another short-range wireless communication can be performed. However, since the electronic device is configured not to perform NAN communication during a partial interval of the interval available for another short-range wireless communication, the data transmission and/or reception speed via NAN communication may not increase.

The technical problems to be solved in the disclosure are not limited to those mentioned above, and other technical problems not mentioned can be clearly understood from the description below by a person skilled in the technical field to which the disclosure belongs.

### [Solution to Problem]

An electronic device according to an example may include a communication circuit supporting short-range wireless communication and neighbor awareness network (NAN) communication. The electronic device may include a processor. The processor may perform a connection with a second external electronic device via the NAN communication in a state of being connected to a first external electronic device via the short-range wireless communication. The processor may, based on first schedule information related to a first interval configured between at least one discovery window configured in a NAN cluster to which the electronic device belongs, perform the NAN communication with the second external electronic device and the short-range wireless communication with the first external electronic device in a second interval configured between the at least one discovery window and the first interval. Upon receiving second schedule information for the short-range wireless communication that deactivates the short-range wireless communication in a partial interval of the second interval, the processor may generate third schedule information for performing the NAN communication in the partial interval based on the second schedule information. The processor may transmit the third schedule information to the second external electronic device.

An operating method of an electronic device according to an example may include performing a connection with a second external electronic device via a NAN communication in a state of being connected to a first external electronic device via a short-range wireless communication. The operating method of the electronic device 600 may include, based on first schedule information related to a first interval configured between at least one discovery window configured in a NAN cluster to which the electronic device belongs, performing the NAN communication with the second external electronic device and the short-range wireless communication with the first external electronic device in a second interval configured between the at least one discovery window and the first interval. The operating method of the electronic device 600 may include, upon receiving second schedule information for the short-range wireless communication that deactivates the short-range wireless communication in a partial interval of the second interval, generating third schedule information for performing the NAN communication in the partial interval based on the second schedule information. The operating method of the electronic device 600 may include transmitting the third schedule information to the second external electronic device.

### [Advantageous Effects of invention]

According to an example for the electronic device and the operating method thereof, in the case of receiving second schedule information for deactivating short-range wireless communication in a partial interval of the second interval while performing NAN communication in the first interval and short-range wireless communication in the second interval, the electronic device can generate third schedule information for enabling NAN communication to be performed in the partial interval, and transmit the third schedule information to an external electronic device connected via NAN communication. Accordingly, by performing NAN communication in the partial interval configured to perform short-range wireless communication, the electronic device can improve a data transmission and/or reception speed via NAN communication.

The effects obtainable from the disclosure are not limited to those mentioned above, and other effects not mentioned can be clearly understood from the description below by a person skilled in the technical field to which the disclosure belongs.

### [Brief Description of Drawings]

FIG. 1 is a block diagram of an electronic device according to an embodiment.
FIG. 2 is a diagram illustrating a neighbor awareness network (NAN) cluster according to an embodiment.
FIG. 3 is a diagram illustrating a protocol for signal transmission from an electronic device included in a NAN cluster according to an embodiment.
FIG. 4 is a diagram illustrating an example of data transmission and reception within a NAN cluster according to an embodiment.
FIG. 5A is a diagram illustrating an example of data transmission and reception within a NAN cluster according to an embodiment.
FIG. 5B is a diagram illustrating an example in which an electronic device within a NAN cluster performs NAN communication and short-range wireless communication, according to an embodiment.
FIG. 5C is a diagram illustrating an example in which an electronic device within a NAN cluster performs NAN communication and short-range wireless communication, according to an embodiment.
FIG. 6 is a block diagram of an electronic device according to an embodiment.
FIG. 7 is a diagram illustrating an example in which an electronic device generates schedule information for performing NAN communication in a part of a second interval available for short-range wireless communication, in response to activation of a target wake time (TWT) function of short-range wireless communication, according to an embodiment.
FIG. 8 is a diagram illustrating an example in which an electronic device performs NAN communication based on third schedule information for NAN communication in a part of a second interval available for short-range wireless communication, in response to activation of a TWT function of short-range wireless communication, according to an embodiment.
FIG. 9 is a diagram illustrating an example in which an electronic device generates schedule information for performing NAN communication in a part of a second interval available for short-range wireless communication, in response to activation of a notice of absence (NoA) function of short-range wireless communication, according to an embodiment.
FIG. 10 is a diagram illustrating an example in which an electronic device performs NAN communication based on third schedule information for NAN communication in a part of a second interval available for short-range wireless communication, in response to activation of a NoA function of short-range wireless communication, according to an embodiment.
FIG. 11 is a diagram illustrating an example in which an electronic device performs NAN communication based on third schedule information for NAN communication in a part of a second interval available for short-range wireless communication, in response to activation of TWT function and NoA function of short-range wireless communication, according to an embodiment.
FIG. 12 is a flowchart illustrating an operating method of an electronic device, according to an embodiment.

### [Mode for the Invention]

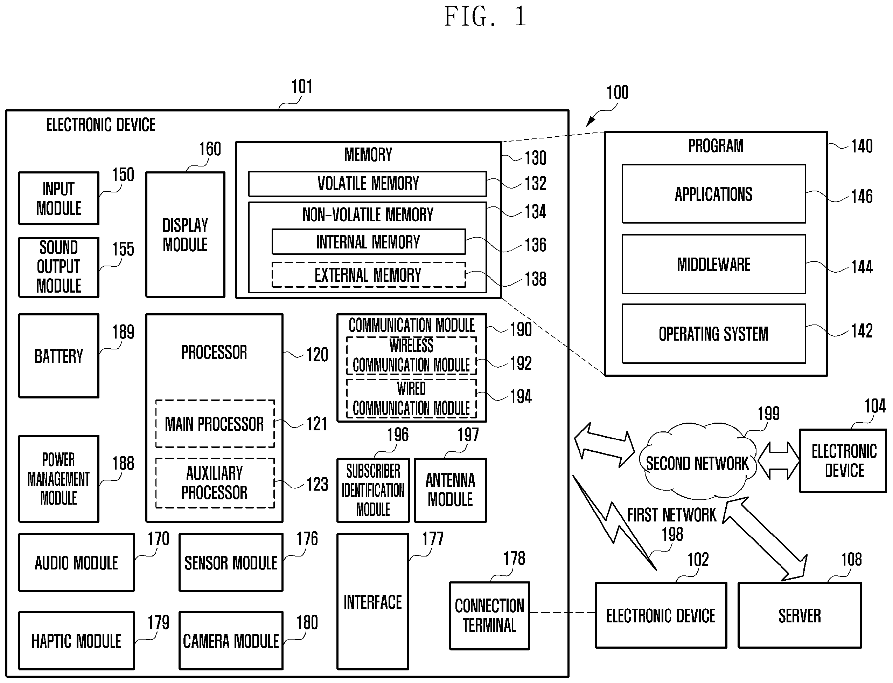

FIG. 1 is a block diagram illustrating an electronic device 101 in a network environment 100 according to various embodiments. With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

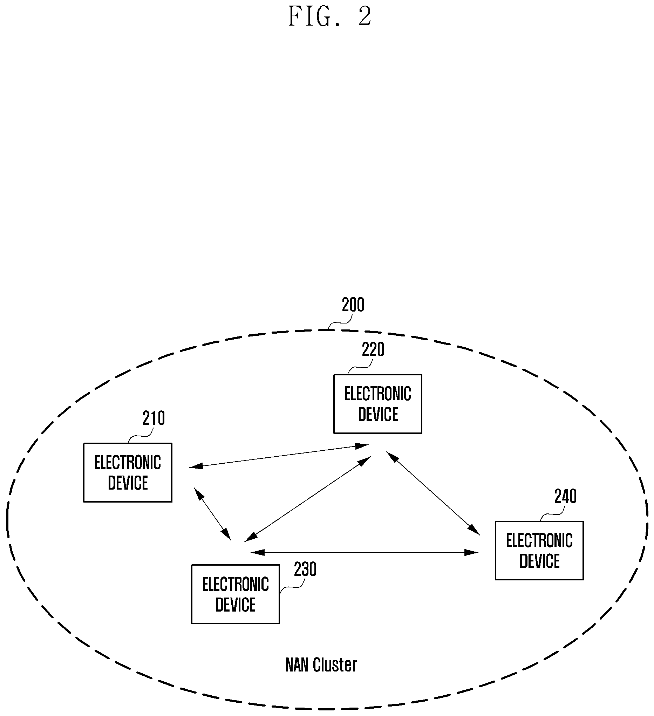

FIG. 2 is a diagram illustrating a neighbor awareness network (NAN) cluster according to various embodiments of the disclosure.

For example, FIG. 2 illustrates a constitution example of a NAN cluster 200 for a proximity network according to various embodiments. In the following description, the cluster 200 may mean a set of electronic devices 210, 220, 230, or 240 constituting a proximity network so that each of the electronic devices (or NAN devices) (e.g., the electronic device 101 of FIG. 1) 210, 220, 230, or 240 transmits and receives data to and from each other. For example, the cluster 200 may be referred to as a NAN cluster according to a NAN specification (or standard).

With reference to FIG. 2, the cluster 200 may include a plurality of electronic devices 210, 220, 230, or 240. The electronic devices 210, 220, 230, or 240 included in the cluster 200 may transmit and receive a beacon (or discovery beacon) and/or a service discovery frame (hereinafter, referred to as an 'SDF') within synchronized time duration (or communication duration) (e.g., discovery (or search) window (discovery window (DW)).

The electronic devices 210, 220, 230, or 240 in the cluster 200 may synchronize time clocks with each other. For example, the electronic devices 210, 220, 230, or 240 may be synchronized with a time clock of one electronic device (e.g., the electronic device 210), and give and receive beacons and SDFs to and from each other in the same discovery window.

According to an embodiment, the electronic device supporting NAN-based low power short range communication technology may broadcast a discovery signal (e.g., beacon) for discovering another electronic device every preconfigured first cycle (e.g., about 100 msec) and perform scanning every second preconfigured cycle (e.g., about 10 msec) to receive a discovery signal broadcast from another electronic device.

The electronic devices 210, 220, 230, or 240 may detect at least one other electronic device positioned in the vicinity of the electronic device based on the discovery signal received through scanning, and synchronize an NAN cluster with the detected at least one other electronic device. NAN cluster synchronization may include an operation of receiving time clock information of an electronic device representing the NAN cluster so that the electronic devices included in the NAN cluster transmit and/or receive data on the same channel and/or during the same time.

For example, as illustrated in FIG. 2, as each of the plurality of electronic devices 210, 220, 230, or 240 transmits a beacon and receives a beacon from the other electronic devices 210, 220, 230, or 240, each of the plurality of electronic devices 210, 220, 230, or 240 may form one cluster 200 that operates according to the synchronized time clock, and the electronic devices 210, 220, 230, or 240 in the cluster 200 may perform NAN cluster synchronization.

The NAN cluster synchronization may be performed based on a time and channel of the electronic device having the highest master preference in the cluster 200. For example, the electronic devices 210, 220, 230, or 240 in the cluster 200 formed through discovery may exchange a signal on master preference information indicating a preference that operates as an anchor master, and an electronic device having the highest master preference may be determined as an anchor master (or master electronic device) through the exchanged signal.

The anchor master may mean an electronic device that serves as a reference for time and channel synchronization of the electronic devices 210, 220, 230, or 240 in the cluster 200. The anchor master may be changed according to the master preference of the electronic device. Each of the electronic devices 210, 220, 230, or 240 synchronized in time and channel may transmit a beacon and an SDF within a discovery window (or search interval) repeated according to a preconfigured cycle, and receive a beacon and an SDF from another electronic device in the cluster 200. According to an embodiment, in order to continuously maintain time and channel synchronization of the electronic devices 210, 220, 230, or 240 in the cluster 200, the beacon may be periodically transmitted and received every discovery window. In order to provide a service with the found electronic devices 210, 220, 230, or 240, the SDF may be transmitted and received in the discovery window, as needed. According to an embodiment, an electronic device operating as an anchor master among the electronic devices 210, 220, 230, or 240 synchronized in time and channel may transmit a beacon so as to detect a new electronic device in an interval between discovery windows.

Each of the electronic devices 210, 220, 230, or 240 in the cluster 200 may operate in an active state only during the discovery window and operate in a low power state (e.g., sleep state) during the remaining interval other than the discovery window, thereby reducing current consumption.

For example, the discovery window is a time (e.g., milliseconds) during which the electronic device is in an active state (or a wake state) and consumes a lot of current, whereas in an interval other than the discovery window, the electronic device maintains a sleep state; thus, low power discovery may be possible.

The electronic devices 210, 220, 230, or 240 in the cluster 200 may be simultaneously activated at a starting time point (e.g., DW start) of the synchronized discovery window and be simultaneously switched to a sleep state at an end time point (e.g., DW end) of the discovery window.

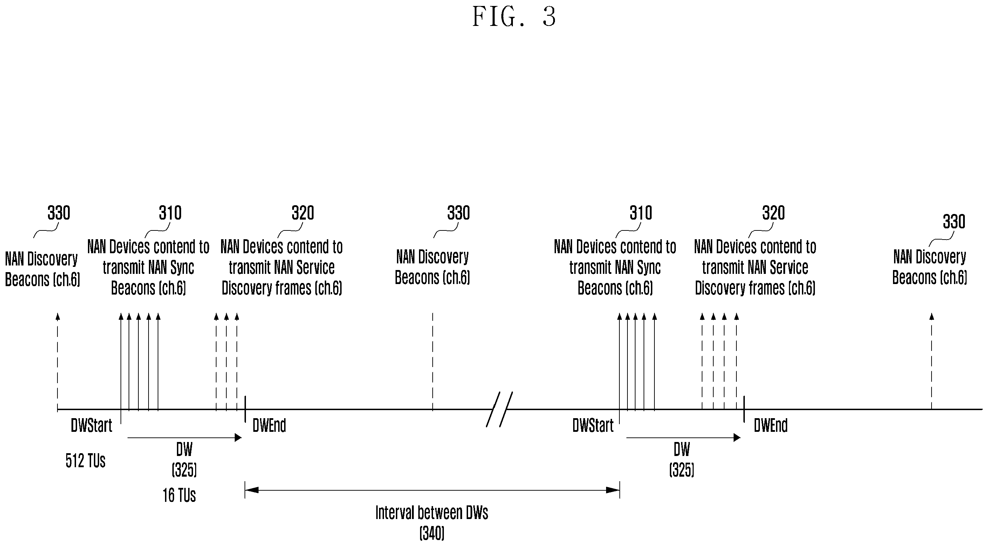

The electronic devices 210, 220, 230, or 240 included in the cluster 200 may perform discovery, synchronization, and data exchange operations using a protocol illustrated in FIG. 3 to be described later.

FIG. 3 is a diagram illustrating a protocol for transmitting a signal of an electronic device included in a NAN cluster according to various embodiments of the disclosure.

For example, FIG. 3 is a diagram illustrating a discovery window according to various embodiments. FIG. 3 illustrates an example in which electronic devices included in one cluster transmit signals through a specific channel (e.g., Ch6) based on the NAN specification.

With reference to FIG. 3, electronic devices included in one cluster may transmit a synchronization beacon 310 and an SDF 320 in a synchronized discovery window (DW) 325. A discovery beacon 330 may be transmitted by at least one electronic device in an interval 340 other than the DW 325 (e.g., an interval between DWs). According to an embodiment, the electronic devices may transmit the synchronization beacon 310 and the SDF 320 based on contention. For example, the synchronization beacon 310 and the SDF 320 may be transmitted based on contention between electronic devices belonging to the cluster.

The DW 325 may be an interval in which a corresponding electronic device is activated from a sleep state, which is a power saving mode to a wake-up state for data exchange between respective electronic devices. For example, the DW 325 may be divided into time units (TUs) of milliseconds. According to an embodiment, the DW 325 for transmitting and receiving the synchronization beacon 310 and the SDF 320 may occupy 16 time units (TUs), and have a cycle (or interval) repeated in 512 TUs.

The discovery beacon 330 may represent a signal transmitted to enable another electronic device that has not joined the cluster to discover the cluster. For example, the discovery beacon 330 is a signal notifying existence of a cluster, and electronic devices that have not joined the cluster may perform a passive scan to receive the discovery beacon 330, thereby discovering and joining the cluster.

The discovery beacon 330 may include information necessary for synchronization with the cluster. For example, the discovery beacon 330 may include at least one of a frame control (FC) field indicating a signal function (e.g., beacon), a broadcast address, a media access control (MAC) address of a transmitting electronic device, a cluster identifier (ID), a sequence control field, a time stamp for a beacon frame, a beacon interval indicating a transmission interval of the discovery beacon 330, or capability information on the electronic device that transmits the discovery beacon 330.

The discovery beacon 330 may include at least one proximity network (or cluster) related information element. In an embodiment, the proximity network related information may be referred to as attribute information.

The synchronization beacon 310 may represent a signal for maintaining synchronization between synchronized electronic devices in the cluster. The synchronization beacon 310 may be transmitted by a synchronization device among electronic devices in the cluster. For example, the synchronization device may include an anchor master device defined in the NAN specification, a master device, or a non-master sync device.

The synchronization beacon 310 may include information necessary for synchronization of electronic devices within the cluster. For example, the synchronization beacon 310 may include at least one of an FC field indicating a signal function (e.g., beacon), a broadcast address, a MAC address of a transmitting electronic device, a cluster identifier, a sequence control field, a time stamp for a beacon frame, a beacon interval indicating an interval between starting points of the DW 325, or capability information on a transmitting electronic device. According to an embodiment, the synchronization beacon 310 may include at least one proximity network (or cluster) related information element. For example, the proximity network related information may include contents for a service provided through the proximity network.

The SDF 320 may represent a signal for exchanging data through a proximity network. According to an embodiment, the SDF 320 represents a vendor specific public action frame and may include various fields. For example, the SDF 320 may include a category or an action field, and include at least one proximity network related information.

The synchronization beacon 310, the SDF 320, and the discovery beacon 330 may include proximity network related information. In an embodiment, the proximity network related information may include an identifier indicating a type of information, a length of the information, and a body field, which is corresponding information. According to an embodiment, the corresponding information may include at least one of master indication information, cluster information, service identifier list information, service descriptor information, connection capability information, wireless LAN infrastructure information, peer to peer (P2P) operation information, independent basic service set (IBSS) information, mesh information, additional proximity network service discovery information, further availability map information, country code information, ranging information, cluster discovery information, or vendor specific information.

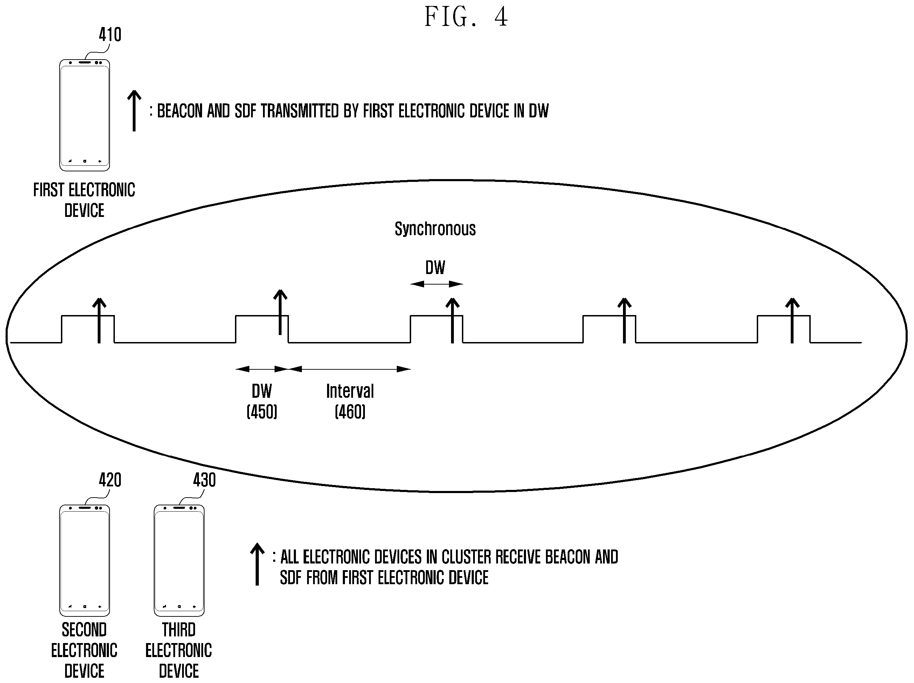

FIG. 4 is a diagram illustrating an example of data transmission and reception in a NAN cluster according to various embodiments of the disclosure.

For example, FIG. 4 illustrates an example in which a first electronic device 410, a second electronic device 420, and a third electronic device 430 form one cluster through wireless short range communication technology, and each of the electronic devices 410, 420, and 430 may transmit and receive a beacon and/or an SDF to and from each other. According to an embodiment, FIG. 4 may exemplify that the first electronic device 410 of the electronic devices 410, 420, or 430 constituting the cluster serves as a master electronic device.

With reference to FIG. 4, the first electronic device 410 may transmit a beacon and an SDF within the DW 450. The first electronic device 410 may broadcast a beacon and an SDF for each DW 450 repeated each preconfigured interval (e.g., an interval 460).

The second electronic device 420 and the third electronic device 430 may receive the beacon and the SDF transmitted by the first electronic device 410. According to an embodiment, each of the second electronic device 420 and the third electronic device 430 may receive a beacon and an SDF broadcast from the first electronic device 410 for each DW 450.

The beacon transmitted within the DW 450 may include a synchronization beacon and include information for maintaining synchronization between the electronic devices 410, 420, or 430. For example, the second electronic device 420 and/or the third electronic device 430 may perform NAN cluster synchronization based on time clock information of the first electronic device 410 included in a beacon transmitted by the first electronic device 410 operating as a master. The second electronic device 420 and/or the third electronic device 430 may be synchronized, and the DW 450 may be activated at the same time.

In an interval (e.g., the interval 460) other than the DW 450, the electronic devices 410, 420, or 430 may maintain a sleep state so as to reduce current consumption. For example, the electronic devices 410, 420, or 430 may operate in a wake state only in an interval of the DW 450 based on the synchronized time clock to reduce current consumption.

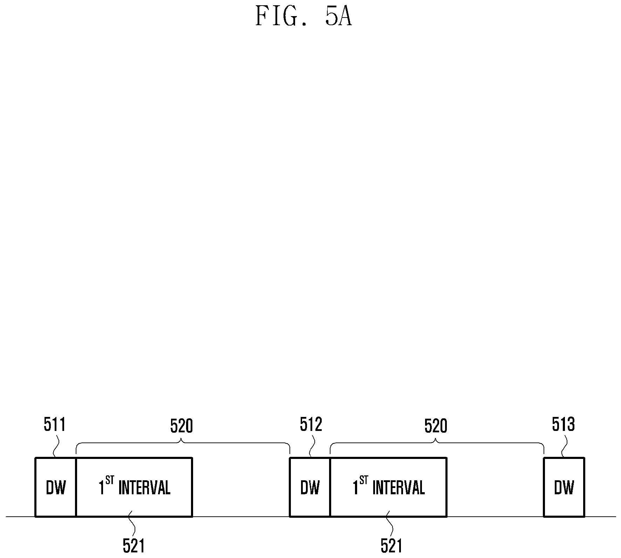

FIG. 5A is a diagram illustrating an example of data transmission and reception within a NAN cluster according to an embodiment.

An electronic device (e.g., the electronic device 410, 420, or 430 in FIG. 4) may perform NAN communication and/or short-range wireless communication in an interval other than the discovery window 450. In an example, the electronic device 410, 420, or 430 may not complete data transmission and/or reception during the discovery window 450. In an example, if the size of data is so large that the transmission and/or reception cannot be completed during the discovery window 450, the electronic device 410, 420, or 430 may not complete data transmission and/or reception during the discovery window 450.

The electronic device 410, 420, or 430 may perform an operation for NAN communication in a first interval 521, which is at least a part of an interval 520 between discovery windows 511, 512, and 513 (e.g., the discovery windows 450 in FIG. 4). For example, the electronic device 410, 420, or 430 may be configured to exchange configuration information (e.g., NAN availability attribute or further available window (FAW) attribute) for performing NAN communication in the first interval 521, which is at least a part of the interval 520 between the discovery windows 511, 512, and 513, and perform NAN communication in the first interval 521 through negotiation. The first interval 521 may be referred to as a further available window (FAW) considering that it is an additional interval available for NAN communication, other than the discovery windows 511, 512, and 513 defined in the NAN cluster. The electronic device 410, 420, or 430 may exchange configuration information for performing NAN communication through a frame (e.g., a schedule update frame, a schedule request frame, and/or a schedule response frame) exchanged in the process of establishing (or generating) a NAN data path (NDP) with a counterpart electronic device for NAN communication. Alternatively, the electronic device 410, 420, or 430 may exchange configuration information for performing NAN communication through a frame (e.g., a service discovery frame and/or a NDP frame) exchanged while performing NAN communication.

The configuration information for NAN communication may include at least one of information indicating a frequency band (e.g., 2.4 GHz, 5 GHz, 6 GHz) of NAN communication performed in the first interval 521, channel information of NAN communication performed in the first interval 521, a starting time (e.g., start offset) of the first interval 521, a duration of the first interval 521, and a period of the first interval 521.

Among the electronic devices 410, 420, and 430, an electronic device to perform NAN communication in the first interval 521, which is at least a part of the interval 520 between the discovery windows 511, 512, and 513, may transmit configuration information for performing NAN communication to an electronic device included in a NAN cluster and establish a NAN data path (NDP) for performing NAN communication through negotiation. The electronic device 410, 420, or 430 may perform transmission and/or reception of data having a relatively large size by transmitting and/or receiving data in the first interval 521 through the NDP.

For convenience of explanation, FIG. 5A illustrates only the first interval 521. However, the electronic device 410, 420, or 430 may configure a plurality of intervals as FAW in the interval 520 between the discovery windows 511, 512, and 513 and transmit and/or receive data during the plurality of intervals.

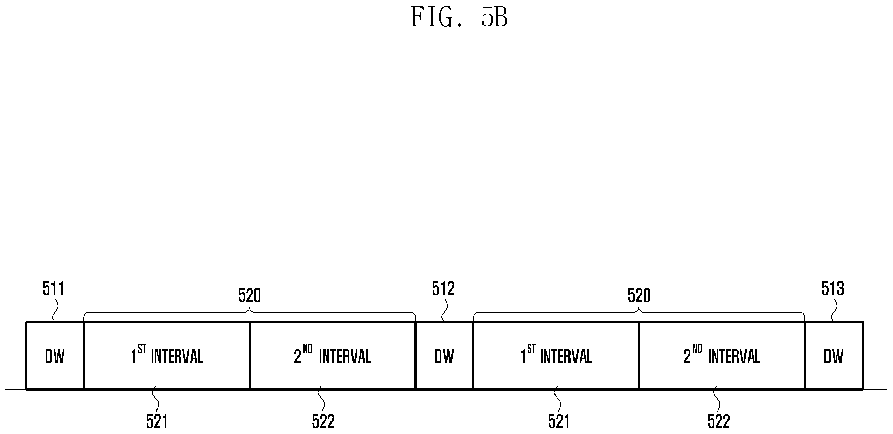

FIG. 5B is a diagram illustrating an example in which an electronic device within a NAN cluster performs NAN communication and short-range wireless communication, according to an embodiment.

An electronic device (e.g., the electronic device 410, 420, or 430 in FIG. 4) may perform NAN communication and/or short-range wireless communication in an interval other than the discovery window 450. In an example, the electronic device 410, 420, or 430 may not complete data transmission and/or reception during the discovery window 450. In an example, if the size of data is so large that the transmission and/or reception cannot be completed during the discovery window 450, the electronic device 410, 420, or 430 may not complete data transmission and/or reception during the discovery window 450.

The electronic device 410, 420, or 430 may perform an operation for NAN communication in a first interval 521, which is at least a part of an interval 520 between discovery windows 511, 512, and 513 (e.g., the discovery windows 450 in FIG. 4). For example, the electronic device 410, 420, or 430 may be configured to exchange configuration information (e.g., NAN availability attribute or further available window (FAW) attribute) for performing NAN communication in the first interval 521, which is at least a part of the interval 520 between the discovery windows 511, 512, and 513, and perform NAN communication in the first interval 521 through negotiation. The first interval 521 may be referred to as a further available window (FAW) considering that it is an additional interval available for NAN communication, other than the discovery windows 511, 512, and 513 defined in the NAN cluster.

The electronic device 410, 420, or 430 may perform short-range wireless communication (e.g., Wi-Fi, Wi-Fi direct, and/or hotspot) in a second interval 522, which is an interval other than the first interval 521 in the interval 520 between the discovery windows 511, 512, and 513. For example, the electronic device 410, 420, or 430 may perform a series of operations for performing short-range wireless communication other than NAN communication in the second interval 522, which is at least a part of the interval 520 between the discovery windows 511, 512, and 513. The second interval 522 is at least a part of the interval excluding the discovery windows 511, 512, and 513 and the first interval 521 defined in the NAN cluster, and it may be referred to as an unaligned window (ULW) in consideration of the characteristic of performing short-range wireless communication other than NAN communication between the discovery windows 511, 512, and 513.

According to an example, the electronic device 410, 420, or 430 may perform an operation of configuring not to perform NAN communication in the second interval 522 in order to perform short-range wireless communication in the second interval 522. The electronic device 410, 420, or 430 may exchange configuration information (e.g., unaligned schedule attribute) for performing short-range wireless communication (or configuration information for not performing NAN communication) in the second interval 522, which is at least a part of the interval 520 between the discovery windows 511, 512, and 513, and may configure not to perform NAN communication in the second interval 522 (or to be able to perform short-range wireless communication in the second interval 522) through negotiation using the configuration information. The configuration information for performing short-range wireless communication may include at least one of information indicating a frequency band (e.g., 2.4 GHz, 5 GHz, 6 GHz) of short-range wireless communication performed in the second interval 522, channel information of short-range wireless communication performed in the second interval 522, a starting time of the second interval 522 (e.g., a starting time field of the unaligned schedule attribute), a duration of the second interval 522 (e.g., a duration field of the unaligned schedule attribute), and a period of the second interval 522 (e.g., a period field of the unaligned schedule attribute).

Among the electronic devices 410, 420, and 430, an electronic device to perform short-range wireless communication in the second interval 522 of the interval 520 between the discovery windows 511, 512, and 513 may transmit configuration information for not performing NAN communication in the second interval 522 (or configuration information for performing short-range wireless communication in the second interval 522) to an electronic device included in a NAN cluster, and may be configured to perform short-range wireless communication in the second interval 522.

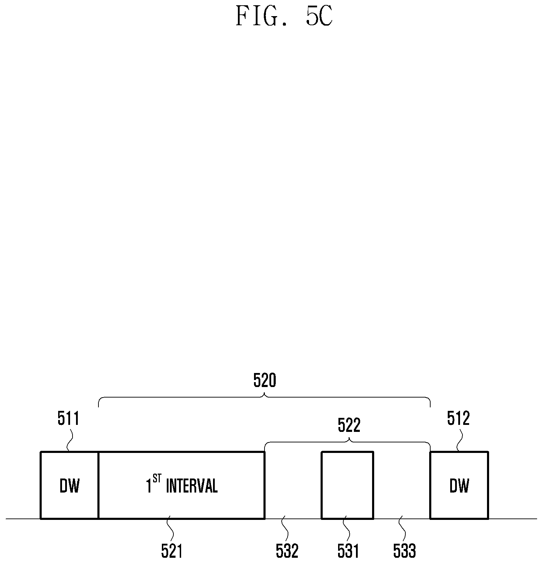

FIG. 5C is a diagram illustrating an example in which an electronic device within a NAN cluster performs NAN communication and short-range wireless communication, according to an embodiment.

An electronic device (e.g., the electronic device 410, 420, or 430 in FIG. 4) may transmit and/or receive data with electronic devices within a NAN cluster via NAN communication in the discovery windows 511, 512, and 513 and the first interval 521, which is a part of the interval 520 between the discovery windows 511, 512, and 513. A certain electronic device 410 among the electronic device 410, 420, or 430 may transmit and/or receive data via short-range wireless communication other than NAN communication in the second interval 522, which is another part of the interval 520 between the discovery windows 511, 512, and 513.

The electronic device 410 performing short-range wireless communication in the second interval 522 may support a function (e.g., target wake time (TWT)) for activating short-range wireless communication in at least a part of the second interval 522 or a function (e.g., notice of absence (NoA)) for deactivating short-range wireless communication in the first interval 521.

TWT is a function proposed and implemented in IEEE 802.11 ax (or Wi-Fi 6). An electronic device supporting TWT may transmit and/or receive data through short-range wireless communication during a specified time, and by switching a communication circuit that supports short-range wireless communication to an idle state (or an inactive state) during other times excluding the specified time, it may reduce power consumed in performing short-range wireless communication.

The electronic device 410 supporting a TWT function may activate, in a state of being connected to an electronic device (e.g., the electronic device 102 in FIG. 1) via short-range wireless communication, the TWT function through negotiation with the electronic device 102 and configure TWT parameters. The TWT parameters may be parameters required to perform the TWT function. According to an embodiment, the TWT parameters may include at least one of a Target Wake Time indicating an activation time of data transmission and/or reception, a TWT duration (or TWT service period (SP)) indicating a section where data transmission and/or reception can be performed, and/or a TWT wake interval indicating an interval between an activation time of data transmission and/or reception and a next activation time of data transmission and/or reception.

With reference to FIG. 5C, the electronic device 410 may activate short-range wireless communication (or transmit and/or receive data via short-range wireless communication) in a partial interval 531 of the second interval 522 and deactivate short-range wireless communication (or may not transmit and/or receive data via short-range wireless communication) in the other partial intervals 532 and 533.

With reference to FIG. 5C, the electronic device 410 may be configured not to perform short-range wireless communication in the other partial intervals 532 and 533 within the second interval 522 configured to perform short-range wireless communication. Even though the electronic device 410 is in a state capable of performing NAN communication in the other partial intervals 532 and 533, it may be configured not to perform both NAN communication and short-range wireless communication. Even though the electronic device 410 is in a state capable of performing NAN communication in the other partial intervals 532 and 533, by being configured not to perform NAN communication, it may experience a phenomenon in which data transmission and/or reception speed (or throughput) through NAN communication is reduced. That is, as an interval where NAN communication and short-range wireless communication are not performed occur according to the activation of the TWT function, a phenomenon in which the performance of NAN communication is reduced may occur.

Hereinafter, an example of increasing the performance of NAN communication will be described, by changing (or generating) schedule information for performing NAN communication and performing NAN communication in intervals 532 and 533 where short-range wireless communication is deactivated, according to the activation of a function (e.g., target wake time (TWT), notice of absence (NoA)) that activates short-range wireless communication in at least a part of the second interval 522 and deactivates short-range wireless communication in the other part excluding the at least a part of the interval.

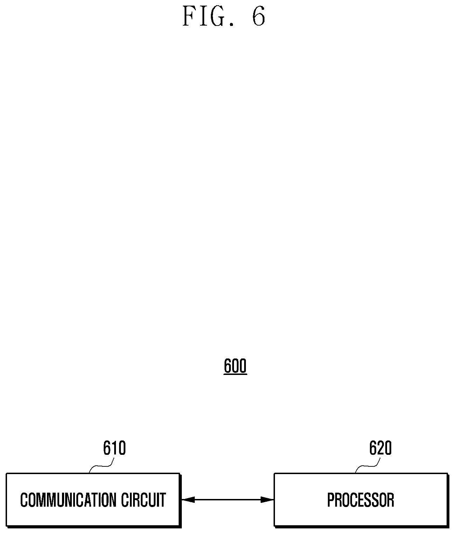

FIG. 6 is a block diagram of an electronic device according to an embodiment.

According to an embodiment, the electronic device 600 (e.g., the electronic device 410, 420, or 430 in FIG. 4) may include a communication circuit 610 (e.g., the wireless communication module 192 in FIG. 1) and/or a processor 620 (e.g., the processor 120 in FIG. 1).

The communication circuit 610 may include various circuit structures used for modulating and/or demodulating signals in the electronic device 600. For example, the communication circuit 610 may modulate a baseband signal into a radio frequency (RF) band signal to be output through an antenna (not shown), or may demodulate an RF band signal received through an antenna into a baseband signal and transmit it to the processor 620.

The processor 620 may perform an operation of receiving data transmitted by an application processor (e.g., the processor 120 in FIG. 1) and generating a packet for transmitting the received data. The processor 620 may be defined as a communication processor or an application processor included in a communication module (e.g., the wireless communication module 192 in FIG. 1). The processor 620 may be electrically or operatively connected to the communication circuit 610 to control the communication circuit 610.

The processor 620 may be connected to a first external electronic device (e.g., the electronic device 102 in FIG. 1) via short-range wireless communication, and control the communication circuit 610 to transmit data to the first external electronic device 102 via short-range wireless communication, and to receive data from the first external electronic device 102 via short-range wireless communication.

The processor 620, in a state of being connected to the first external electronic device 102 via short-range wireless communication, may be connected to a second external electronic device (e.g., the electronic devices 210, 220, 230, or 240 in FIG. 2) via neighbor awareness network (NAN) communication.

The processor 620 may join a pre-created NAN cluster (e.g., the NAN cluster 200 in FIG. 2) or create a new cluster (e.g., the NAN cluster 200 in FIG. 2) upon activation of NAN communication.

The processor 620 may perform synchronization with the NAN cluster 200 based on NAN cluster information contained in a signal broadcast by the second external electronic device 210, 220, 230, or 240 included in the NAN cluster 200 (or network). Alternatively, the processor 620 may receive NAN cluster information through a non-NAN-based communication scheme (e.g., short-range wireless communication including Bluetooth or Wi-Fi). For example, the processor 620 may transmit a probe request signal to find the second external electronic device 210, 220, 230, or 240 to be connected via Wi-Fi, and perform NAN cluster synchronization based on NAN cluster information contained in a probe response message transmitted by the second external electronic device 210, 220, 230, or 240 in response to the probe request signal.

The NAN cluster synchronization may include an operation of receiving time clock information of an electronic device representing a NAN cluster (or a master device of the NAN cluster) (e.g., the first electronic device 410 in FIG. 4) so that electronic devices included in the NAN cluster 200 transmit and/or receive data through the same channel and/or during the same time. For example, the processor 620 may receive a beacon broadcast by the second external electronic device 210, 220, 230, or 240 and perform NAN cluster synchronization based on the time clock information of the second external electronic device 210, 220, 230, or 240 contained in the beacon.

After the NAN cluster synchronization is completed, the processor 620 may activate the communication circuit 610 for each designated interval (e.g., a discovery window such as the discovery window 511, 512, or 513 in FIG. 5A) and control the communication circuit 610 to perform NAN communication for each designated interval. The NAN communication may refer to receiving data transmitted by the second external electronic device 210, 220, 230, or 240 included in the NAN cluster 200 or transmitting data to the second external electronic device 210, 220, 230, or 240.

After the NAN cluster synchronization process or the synchronization of the NAN cluster is completed, the processor 620 may receive first schedule information related to NAN communication from the second external electronic device 210, 220, 230, or 240.

The first schedule information may include schedule information related to the discovery window 511, 512, or 513. The schedule information related to the discovery window 511, 512, or 513 may include at least one of the duration (or length) of the discovery window 511, 512, or 513, the starting time of the discovery window 511, 512, or 513, and the period of the discovery window 511, 512, or 513. The processor 620 may perform NAN communication with the second external electronic device 210, 220, 230, or 240 based on the first schedule information.

The first schedule information may include schedule information related to NAN communication to be performed in a partial interval between the discovery windows 511, 512, and 513 as well as schedule information related to the discovery windows 511, 512, and 513. According to an example, the processor 620 may be configured to exchange configuration information (e.g., NAN availability attribute or further available window (FAW) attribute) for performing NAN communication in a first interval (e.g., the first interval 521 in FIG. 5A), which is at least a partial interval of an interval (e.g., the interval 520 in FIG. 5A) between the discovery windows 511, 512, and 513, and to perform NAN communication in the first interval 521 through negotiation. The first interval 521 may be referred to as a further available window (FAW), considering that it is an additional interval where NAN communication is available, other than the discovery windows 511, 512, and 513 defined in the NAN cluster. The configuration information for NAN communication may include at least one of information indicating a frequency band (e.g., 2.4 GHz, 5 GHz, 6 GHz) of the NAN communication performed in the first interval 521, channel information of the NAN communication performed in the first interval 521, a starting time of the first interval 521 (e.g., start offset), a duration of the first interval 521, and a period of the first interval 521.

The processor 620 may negotiate with the second external electronic device 210, 220, 230, or 240 so that the interval (or time) for data transmission and/or reception with the first external electronic device 102 through short-range wireless communication does not overlap with the discovery windows 511, 512, and 513. In addition, the processor 620 may negotiate with the second external electronic device 210, 220, 230, or 240 so that the interval (or time) for data transmission and/or reception with the first external electronic device 102 through short-range wireless communication does not overlap with the first interval 521, which is a partial interval of the interval 520 between the discovery windows 511, 512, and 513.

The processor 620 may perform short-range wireless communication (e.g., Wi-Fi, Wi-Fi direct, and/or Hotspot) in a second interval (e.g., the second interval 522 in FIG. 5B), which is an interval other than the first interval 521 within the interval 520 between the discovery windows 511, 512, and 513. For example, the processor 620 may perform a series of operations for performing short-range wireless communication other than NAN communication in the second interval 522, which is at least a partial interval of the interval 520 between the discovery windows 511, 512, and 513. The second interval 522 is at least a part of an interval excluding the first interval 521 and the discovery windows 511, 512, and 513 defined in the NAN cluster, and it may be referred to as an unaligned window (ULW) considering the characteristic of performing short-range wireless communication other than NAN communication between the discovery windows 511, 512, and 513.

To perform short-range wireless communication in the second interval 522, the processor 620 may perform an operation of configuring not to perform NAN communication in the second interval 522.

The processor 620 may exchange configuration information (e.g., unaligned schedule attribute) for performing short-range wireless communication (or configuration information for not performing NAN communication) in the second interval 522, which is at least a part of the interval 520 between the discovery windows 511, 512, and 513, and may configure not to perform NAN communication in the second interval 522 (or to be able to perform short-range wireless communication in the second interval 522) through negotiation using the configuration information. The configuration information for performing short-range wireless communication may include at least one of information indicating a frequency band (e.g., 2.4 GHz, 5 GHz, 6 GHz) of short-range wireless communication performed in the second interval 522, channel information of short-range wireless communication performed in the second interval 522, a starting time of the second interval 522 (e.g., a starting time field of the unaligned schedule attribute), a duration of the second interval 522 (e.g., a duration field of the unaligned schedule attribute), and a period of the second interval 522 (e.g., a period field of the unaligned schedule attribute).

Through the above-described process, the processor 620 may control the communication circuit 610 to exchange data with the second external electronic device 210, 220, 230, or 240 through NAN communication in the discovery windows 511, 512, and 513 and the first interval 521, and may control the communication circuit 610 to exchange data with the first external electronic device 102 through short-range wireless communication in the second interval 522. According to an example, a schedule for the electronic device 600 to perform NAN communication and short-range wireless communication may be implemented similarly to FIG. 5B. The schedule illustrated in FIG. 5B is an example, and the first interval 521 and the second interval 522 may be configured to exist between the discovery windows 511, 512, and 513.

The processor 620 may perform NAN communication with the second external electronic device 210, 220, 230, or 240 (or may control the communication circuit 610), based on first schedule information related to at least one discovery window 511, 512, or 513 configured in the NAN cluster 200 to which the electronic device 600 belongs (or includes the electronic device 600) and the first interval 521 configured between the discovery windows 511, 512, and 513, and it may transmit and/or receive data with the first external electronic device 102 via short-range wireless communication in the second interval 522 configured between the discovery windows 511, 512, and 513.

The electronic device 600 performing short-range wireless communication in the second interval 522 may support a function (e.g., target wake time (TWT), notice of absence (NoA)) that activates short-range wireless communication in at least a partial interval (e.g., 531 in FIG. 5C) of the second interval 522 and deactivates short-range wireless communication in the other partial intervals (e.g., 532 and 533 in FIG. 5C). Due to various causes, the electronic device 600 may enable the function (e.g., TWT function, NoA function) that activates short-range wireless communication in at least a partial interval (e.g., 531 in FIG. 5C) of the second interval 522 and deactivates short-range wireless communication in the other partial intervals (e.g., 532 and 533 in FIG. 5C).

TWT is a function proposed and implemented in IEEE 802.11 ax (or Wi-Fi 6). The electronic device 600 supporting TWT may transmit and/or receive data through short-range wireless communication during a specified time, and by switching a communication circuit that supports short-range wireless communication to an idle state (or an inactive state) during other times excluding the specified time, it may reduce power consumed in performing short-range wireless communication. While the disclosure exemplifies TWT, it may also be applied to various functions (e.g., power save mode, automatic power save delivery (APSD) mode) capable of deactivating short-range wireless communication during other times.

The NoA function is a function to deactivate short-range wireless communication during a specific interval. The electronic device 600 supporting the NoA function may reduce power consumption in short-range wireless communication by switching short-range wireless communication to an inactive state during a time period configured as a NoA interval.

According to an example, the processor 620 may deactivate short-range wireless communication in a partial interval of the second interval 522 upon receiving TWT function activation information indicating that the first external electronic device 102 connected via short-range wireless communication activates the TWT function.

According as the function (e.g., TWT function, NoA function) for deactivating short-range wireless communication in partial intervals 532 and 533 of the second interval 522 is enabled, the processor 620 may perform a series of operations for performing NAN communication in the partial intervals 532 and 533. For example, when the function (e.g., TWT function) for activating short-range wireless communication in a partial interval 531 of the second interval 522 is enabled, the processor 620 may perform a series of operations for performing NAN communication in the other partial intervals 532 and 533. For example, when the function (e.g., NoA function) for deactivating short-range wireless communication in the discovery windows 511, 512, and 513, the first interval 521, and the other partial intervals 532 and 533 of the second interval 522 is enabled, the processor 620 may perform a series of operations for performing NAN communication in the other partial intervals 532 and 533.

In the process of activating the function (e.g., TWT function, NoA function) for deactivating short-range wireless communication in partial intervals 532 and 533 of the second interval 522, the processor 620 may receive second schedule information related to the function (e.g., TWT function, NoA function) for deactivating short-range wireless communication in the partial intervals 532 and 533 of the second interval 522 from the first external electronic device 102.

The second schedule information may refer to schedule information for performing short-range wireless communication. According to an example, when the function (e.g., TWT function) for deactivating short-range wireless communication in partial intervals 532 and 533 of the second interval 522 is activated, the second schedule information may contain parameters related to a section in which short-range wireless communication is activated. According to an example, the second schedule information may include at least one TWT parameter, and the second schedule information may include at least one of a Target Wake Time indicating an activation time of data transmission and/or reception, a TWT duration (or TWT service period (SP)) indicating a section where data transmission and/or reception can be performed, and/or a TWT wake interval indicating an interval between an activation time of data transmission and/or reception and a next activation time of data transmission and/or reception.

The processor 620 may generate third schedule information for performing NAN communication in an interval (e.g., 532, 533) where short-range wireless communication is disabled, based on the second schedule information.

According to an example, when the TWT function is activated in the electronic device 600, the processor 620 may generate third schedule information in a manner of converting TWT parameters contained in the second schedule information. The third schedule information may include parameters that configure an interval where NAN communication is not performed, and the processor 620 may generate the third schedule information by converting TWT parameters into parameters related to an unaligned window (ULW).

The interval where short-range wireless communication is activated by the TWT function may be substantially identical to the interval (ULW) where NAN communication is not performed, or the interval where short-range wireless communication is activated by the TWT function may be included in the interval (ULW) where NAN communication is not performed.

The processor 620 may determine the starting time of the second interval 522 based on the Target Wake Time, which indicates the activation time of data transmission and/or reception, among the TWT parameters. Alternatively, the processor 620 may convert the Target Wake Time, which indicates the activation time of data transmission and/or reception, among the TWT parameters into the starting time of the second interval 522. The unit (64 bits) of the TWT and the unit (32 bits) of the starting time of the second interval 522 may be different from each other, and the processor 620 may consider different units when converting the Target Wake Time into the starting time of the second interval 522. For example, the processor 620 may determine the value (e.g., remainder) obtained by dividing the Target Wake Time by 232 (or through a modular operation) as the duration of the second interval 522.

The processor 620 may determine the duration of the second interval 522 based on the TWT duration, indicating an interval where data transmission and/or reception can be performed, among the TWT parameters. Alternatively, the processor 620 may convert the TWT duration, indicating an interval where data transmission and/or reception can be performed, among the TWT parameters, into the duration of the second interval 522. The unit (256 µs) used to configure the TWT parameter and the unit (1 µs) used to configure the ULW may be different, and the processor 620 may consider different units when converting the TWT duration into the duration of the second interval 522. For example, by multiplying the TWT duration by 256 µs, the processor 620 may convert it into the duration of the second interval 522.

The processor 620 may determine the period (or interval) of the second interval 522 based on the TWT wake interval, which indicates the interval between the activation time and the next activation time of data transmission and/or reception, among the TWT parameters. The processor 620 may determine the duration of the TWT wake interval based on a parameter (e.g., TWT wake interval mantissa, TWT wake interval exponent) related to the TWT wake interval, and may determine the period of the second interval 522 based on the duration of the TWT wake interval. The duration of the TWT wake interval may be substantially equal to the period of the second interval 522, but the units used to express it may be different. According to an example, the duration of the TWT wake interval may be expressed as 64 bits, and the duration of the ULW may be expressed as 32 bits. The processor 620 may consider different units when converting the TWT wake interval into the period of the second interval 522. For example, the processor 620 may determine a value (e.g., remainder) obtained by dividing the target wake interval by 232 (or through a modular operation) as the period of the second interval 522.

The processor 620 may determine a value indicating whether to repeat short-range wireless communication in the second interval 522, based on a value indicating whether to repeat the TWT function among the TWT parameters (e.g., if the value indicating whether to repeat the TWT function is 1, it indicates to repeat the TWT function; if the value indicating whether to repeat the TWT function is 0, it indicates to perform the TWT function only a specified number of times and to release the TWT function after the specified number of times). If the value indicating whether to repeat the TWT function among the TWT parameters is a value (e.g., 1) indicating to repeat the TWT function, the processor 620 may configure the value indicating whether to repeat short-range wireless communication in the second interval 522 to a value (e.g., 255) indicating to repeat short-range wireless communication.

If the value indicating whether the TWT function is repeated among the TWT parameters is a value (e.g., 0) indicating that the TWT function is terminated after a specified number of times, the processor 620 may configure the value indicating whether to repeat the short-range wireless communication in the second interval 522 to a value (e.g., 1) indicating that the short-range wireless communication is terminated after a specified number of times.

The above-described conversion scheme may be summarized in Table 1 below.

**[Table 1]**

| | TWT parameter | | | ULW parameter | | |
|---|---|---|---|---|---|---|
| | Field | Size (bits) | Value | Field | Size (bits) | Value |
| Wake up timing (Starting time) | Target wake time field | 64 | a (TSF) | Starting time field | 32 | a' = a mod 2³² |
| Duration (Length) | Nominal minimum TWT wake duration | 8 | b (256µs) | Duration field | 32 | b' = b * 256 |
| Interval (Period) | TWT wake interval mantissa | 16 | e = c * 2^{d} | Period field | 32 | e' = e mod 2³² |
| | TWT wake interval exponent | 5 | | | | |
| Count (Number of repetitions) | Implicit field | 1 | 1 (implicit) | Count down | 8 | 255 (implicit) |
| | | | 0 (explicit) | | | 1 (explicit) |

The processor 620 may generate third schedule information based on the second schedule information (or the TWT parameter contained in the second schedule information) received from the first external electronic device 102 through the above-described scheme. The third schedule information may refer to information that enables the electronic device 600 to perform NAN communication in the discovery windows 511, 512, and 513, the first interval 521 between the discovery windows 511, 512, and 513, and/or partial intervals 532 and 533 of the second interval 522 that do not perform short-range wireless communication.

The example described above is an example of generating the third schedule information when the first external electronic device 102 activates the TWT function, and it may also be applied when the first external electronic device 102 activates the NoA function.

According to an example, the second schedule information may include parameters related to an interval where short-range wireless communication is deactivated, if the function (e.g., NoA function) for deactivating short-range wireless communication in partial intervals 532 and 533 of the second interval 522 is activated.

According to an example, the second schedule information may include at least one NoA parameter, and the NoA parameter may include a parameter indicating a starting time of an interval where which short-range wireless communication is deactivated, a parameter indicating a duration of an interval where short-range wireless communication is deactivated, a parameter indicating a period of an interval where short-range wireless communication is deactivated, and/or a parameter indicating whether the NoA function is repeated.

The processor 620 may determine the period (or interval) of the first interval 521 based on a parameter indicating the period (or interval) of the interval during which short-range wireless communication is deactivated among the NoA parameters. The period of the interval during which short-range wireless communication is deactivated may be substantially equal to the period of the first interval 521. The processor 620 may determine the period of the interval during which short-range wireless communication is deactivated as the period of the first interval 521.

The processor 620 may determine the duration of the first interval 521 based on a parameter indicating the duration of the interval during which short-range wireless communication is deactivated among the NoA parameters. The duration of the interval during which short-range wireless communication is deactivated may be substantially equal to the value obtained by subtracting the duration of the second interval 522, which is the interval during which short-range wireless communication is activated, from the duration between the discovery windows 511, 512, and 513 (or the period of the interval during which short-range wireless communication is disabled). The processor 620 may determine the duration of the second interval 522 by subtracting the duration of the first interval 521, which is the interval during which short-range wireless communication is deactivated, from the duration between the discovery windows 511, 512, and 513 (or the period of the interval during which short-range wireless communication is deactivated).

The processor 620 may determine the starting time of the second interval 522 based on a parameter indicating the starting time of the interval during which short-range wireless communication is deactivated among the NoA parameters. The starting time of the second interval 522 may be substantially equal to the starting time of the interval during which short-range wireless communication is deactivated (e.g., the starting time of the discovery window 511, 512, or 513) plus the duration of the interval during which short-range wireless communication is deactivated. The processor 620 may determine the starting time of the second interval 522 by adding the duration of the interval during which short-range wireless communication is deactivated to the starting time of the interval during which short-range wireless communication is disabled.

The processor 620 may determine a value indicating whether to repeat short-range wireless communication in the second interval 522, based on a parameter indicating whether the NoA function is repeated (e.g., if the parameter is 0, it indicates that the NoA function is repeated; if the parameter is a value other than 0, it indicates that the NoA function is repeated for a different number of times), among the NoA parameters.

If the value, among the NoA parameters, indicating whether the NoA function is repeated is a value (e.g., 0) indicating that the NoA function is repeated, the processor 620 may configure the value indicating whether short-range wireless communication is repeated in the second interval 522 to a value (e.g., 255) indicating that short-range wireless communication is repeated.

The above-described conversion scheme may be summarized in Table 2 below.

**[Table 2]**

| | NoA | | | ULW | | |
|---|---|---|---|---|---|---|
| | Field | Size | Value | Field | Size | Value |
| Interval (Period) | Interval | 32 | a (µs) | Period | 32 | a' = a (µs) |
| Duration (Length) | Duration | 32 | b (µs) | Duration | 32 | b' = a' - b (µs) |
| Start timing (Starting time) | Start time | 32 | C (TSF) | Starting time | 32 | c' = c + b (TSF) |
| Count (Number of repetitions) | Count/type | 8 | 0 (repeat) Others (count) | Count down | 8 | 255 (repeat) Others (count) |

Although the above-described scheme shows that the processor 620 converts TWT parameters or NoA parameters into unaligned schedule attributes which indicate configuration information for performing short-range wireless communication in the second interval 522, the disclosure may also convert them into other messages (e.g., further availability window (FAW), sub-slot schedule (s3), availability window (AW)) as well as unaligned schedule attributes.

The processor 620 may perform NAN communication and/or short-range wireless communication according to third schedule information generated based on the second schedule information. The processor 620 may control the communication circuit 610 to transmit the third schedule information to the second external electronic device 210, 220, 230, or 240. By transmitting the third schedule information to the second external electronic device 210, 220, 230, or 240, the processor 620 may allow the electronic device 600 and the second external electronic device 210, 220, 230, or 240 to perform NAN communication in a partial interval of the second interval 522 where short-range wireless communication is deactivated.

When a function (e.g., target wake time (TWT), notice of absence (NoA)) that activates short-range wireless communication in at least a partial interval (e.g., 531 in FIG. 5C) of the second interval 522 and deactivates short-range wireless communication in the other partial intervals (e.g., 532, 533 in FIG. 5C) is deactivated, the processor 620 may perform NAN communication and/or short-range wireless communication based on the first schedule information. The processor 620 may perform NAN communication in the discovery windows 511, 512, and 513 and the first interval 521, and perform short-range wireless communication in the second interval 522.

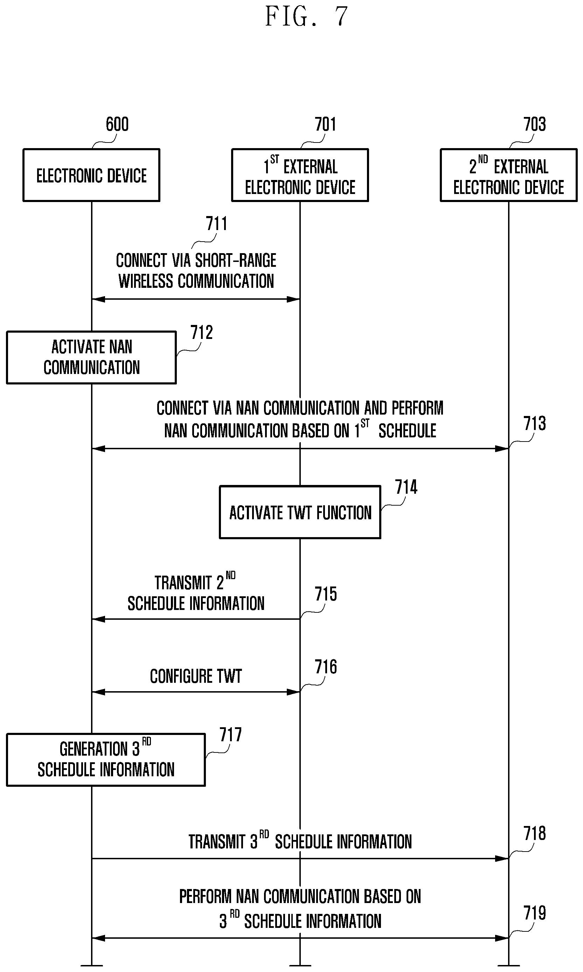

FIG. 7 is a diagram illustrating an example in which an electronic device generates schedule information for performing NAN communication in a part of a second interval available for short-range wireless communication, in response to activation of a target wake time (TWT) function of short-range wireless communication, according to an embodiment.

In operation 711, an electronic device (e.g., the electronic device 600 in FIG. 6) may be connected to a first external electronic device 701 (e.g., the electronic device 102 in FIG. 1) via short-range wireless communication.

By being connected to the first external electronic device (e.g., the electronic device 102 in FIG. 1) via short-range wireless communication, the electronic device 600 may control the communication circuit 610 to transmit data to the first external electronic device 701 via short-range wireless communication and to receive data from the first external electronic device 701 via short-range wireless communication.

In operation 712, the electronic device 600 may activate NAN communication.

The electronic device 600 may activate NAN communication for various reasons (e.g., activation of an application using NAN communication, reception of user input to perform NAN communication).

In a state of being connected to the first external electronic device 701 via short-range wireless communication, the electronic device 600 may be connected to a second external electronic device (e.g., the electronic device 210, 220, 230, or 240 in FIG. 2) via neighbor awareness network (NAN) communication.

Upon activation of NAN communication, the electronic device 600 may join a pre-created NAN cluster (e.g., the NAN cluster 200 in FIG. 2) or create a new cluster (e.g., the NAN cluster 200 in FIG. 2).

The electronic device 600 may perform synchronization with the NAN cluster 200 based on NAN cluster information contained in a signal broadcast by the second external electronic device 703 included in the NAN cluster 200 (or network). Alternatively, the electronic device 600 may receive NAN cluster information through a non-NAN-based communication scheme (e.g., short-range wireless communication including Bluetooth or Wi-Fi). For example, the electronic device 600 may transmit a probe request signal to find the second external electronic device 703 to be connected via Wi-Fi, and perform NAN cluster synchronization based on NAN cluster information contained in a probe response message transmitted by the second external electronic device 703 in response to the probe request signal.

The NAN cluster synchronization may include an operation of receiving time clock information of an electronic device representing a NAN cluster (or a master device of the NAN cluster) (e.g., the first electronic device 410 in FIG. 4) so that electronic devices included in the NAN cluster 200 transmit and/or receive data through the same channel and/or during the same time. For example, the electronic device 600 may receive a beacon broadcast by the second external electronic device 703 and perform NAN cluster synchronization based on the time clock information of the second external electronic device 703 contained in the beacon.

After the NAN cluster synchronization is completed, the electronic device 600 may activate the communication circuit 610 for each designated interval (e.g., a discovery window such as the discovery window 511, 512, or 513 in FIG. 5A) and control the communication circuit 610 to perform NAN communication for each designated section. The NAN communication may refer to receiving data transmitted by the second external electronic device 703 included in the NAN cluster 200 or transmitting data to the second external electronic device 703.

In operation 713, the electronic device 600 and the second external electronic device 703 (e.g., the electronic device 210, 220, 230, or 240 in FIG. 2) may be connected to each other through NAN communication and perform NAN communication based on first schedule information.

After the NAN cluster synchronization process or the synchronization of the NAN cluster is completed, the electronic device 600 may receive first schedule information related to NAN communication from the second external electronic device 703.

The first schedule information may include schedule information related to discovery windows 511, 512, and 513. The schedule information related to the discovery windows 511, 512, and 513 may include at least one of the duration (or length) of the discovery window 511, 512, or 513, the starting time of the discovery window 511, 512, or 513, and the period of the discovery window 511, 512, or 513. The electronic device 600 may perform NAN communication with the second external electronic device 703 based on the first schedule information.

The first schedule information may include schedule information related to NAN communication to be performed in a partial interval between the discovery windows 511, 512, and 513 as well as schedule information related to the discovery windows 511, 512, and 513. According to an example, the electronic device 600 may be configured to exchange configuration information (e.g., NAN availability attribute or further available window (FAW) attribute) for performing NAN communication in a first interval (e.g., the first interval 521 in FIG. 5A), which is at least a partial interval of an interval (e.g., the interval 520 in FIG. 5A) between the discovery windows 511, 512, and 513, and to perform NAN communication in the first interval 521 through negotiation. The first interval 521 may be referred to as a further available window (FAW), considering that it is an additional interval where NAN communication is available, other than the discovery windows 511, 512, and 513 defined in the NAN cluster. The configuration information for NAN communication may include at least one of information indicating a frequency band (e.g., 2.4 GHz, 5 GHz, 6 GHz) of the NAN communication performed in the first interval 521, channel information of the NAN communication performed in the first interval 521, a starting time of the first interval 521 (e.g., start offset), a duration of the first interval 521, and a period of the first interval 521.

The electronic device 600 may negotiate with the second external electronic device 703 so that the interval (or time) for data transmission and/or reception with the first external electronic device 701 through short-range wireless communication does not overlap with the discovery windows 511, 512, and 513. In addition, the electronic device 600 may negotiate with the second external electronic device 703 so that the interval (or time) for data transmission and/or reception with the first external electronic device 701 through short-range wireless communication does not overlap with the first interval 521, which is a partial interval of the interval 520 between the discovery windows 511, 512, and 513.

The electronic device 600 may perform short-range wireless communication (e.g., Wi-Fi, Wi-Fi direct, and/or Hotspot) in a second interval (e.g., the second interval 522 in FIG. 5B), which is an interval other than the first interval 521 within the interval 520 between the discovery windows 511, 512, and 513. For example, the electronic device 600 may perform a series of operations for performing short-range wireless communication other than NAN communication in the second interval 522, which is at least a partial interval of the interval 520 between the discovery windows 511, 512, and 513. The second interval 522 is at least a part of an interval excluding the first interval 521 and the discovery windows 511, 512, and 513 defined in the NAN cluster, and it may be referred to as an unaligned window (ULW) considering the characteristic of performing short-range wireless communication other than NAN communication between the discovery windows 511, 512, and 513.

To perform short-range wireless communication in the second interval 522, the electronic device 600 may perform an operation of configuring not to perform NAN communication in the second interval 522.

The electronic device 600 may exchange configuration information (e.g., unaligned schedule attribute) for performing short-range wireless communication (or configuration information for not performing NAN communication) in the second interval 522, which is at least a part of the interval 520 between the discovery windows 511, 512, and 513, and may configure not to perform NAN communication in the second interval 522 (or to be able to perform short-range wireless communication in the second interval 522) through negotiation using the configuration information. The configuration information for performing short-range wireless communication may include at least one of information indicating a frequency band (e.g., 2.4 GHz, 5 GHz, 6 GHz) of short-range wireless communication performed in the second interval 522, channel information of short-range wireless communication performed in the second interval 522, a starting time of the second interval 522 (e.g., a starting time field of the unaligned schedule attribute), a duration of the second interval 522 (e.g., a duration field of the unaligned schedule attribute), and a period of the second interval 522 (e.g., a period field of the unaligned schedule attribute).

Through the above-described process, the electronic device 600 may control the communication circuit 610 to exchange data with the second external electronic device 703 through NAN communication in the discovery windows 511, 512, and 513 and the first interval 521, and may control the communication circuit 610 to exchange data with the first external electronic device 701 through short-range wireless communication in the second interval 522. According to an example, a schedule for the electronic device 600 to perform NAN communication and short-range wireless communication may be implemented similarly to FIG. 5B. The schedule illustrated in FIG. 5B is an example, and the first interval 521 and the second interval 522 may be configured to exist between the discovery windows 511, 512, and 513.

The electronic device 600 may perform NAN communication with the second external electronic device 703 (or control the communication circuit 610), based on first schedule information related to at least one discovery window 511, 512, or 513 configured in the NAN cluster 200 to which the electronic device 600 belongs (or includes the electronic device 600) and the first interval 521 configured between the discovery windows 511, 512, and 513, and it may transmit and/or receive data with the first external electronic device 701 via short-range wireless communication in the second interval 522 configured between the discovery windows 511, 512, and 513.

In operation 714, the first external electronic device 701 may activate a TWT function.

TWT is a function proposed and implemented in IEEE 802.11 ax (or Wi-Fi 6). The electronic device 620 supporting TWT may transmit and/or receive data through short-range wireless communication during a specified time, and by switching the communication circuit 610 supporting short-range wireless communication to an idle state (or inactive state) during other times excluding the specified time, it may reduce power consumed in performing short-range wireless communication.

According to an example, the electronic device 600 may deactivate short-range wireless communication in a partial interval of the second interval 522 upon receiving TWT function activation information indicating that the first external electronic device 701 connected via short-range wireless communication activates the TWT function.

In operation 715, the first external electronic device 701 may transmit second schedule information to the electronic device 600.

In the process of activating the function (e.g., TWT function, NoA function) for deactivating short-range wireless communication in partial intervals 532 and 533 of the second interval 522, the electronic device 600 may receive second schedule information related to the function (e.g., TWT function, NoA function) for deactivating short-range wireless communication in the partial intervals 532 and 533 of the second interval 522 from the first external electronic device 701.

The second schedule information may refer to schedule information for performing short-range wireless communication. According to an example, when the function (e.g., TWT function) for deactivating short-range wireless communication in partial intervals 532 and 533 of the second interval 522 is activated, the second schedule information may contain parameters related to a section in which short-range wireless communication is activated. According to an example, the second schedule information may include at least one TWT parameter, and the second schedule information may include at least one of a Target Wake Time indicating an activation time of data transmission and/or reception, a TWT duration (or TWT service period (SP)) indicating a section where data transmission and/or reception can be performed, and/or a TWT wake interval indicating an interval between an activation time of data transmission and/or reception and a next activation time of data transmission and/or reception.

In operation 716, the electronic device 600 and the first external electronic device 701 may configure the TWT function based on the second schedule information.

The electronic device 600 and the first external electronic device 701 may change some parameters related to the TWT function through negotiation related to the activation of the TWT function.

In operation 717, the electronic device 600 may generate third schedule information based on the second schedule information.

The electronic device 600 may generate third schedule information for performing NAN communication in an interval (e.g., 532, 533) where short-range wireless communication is disabled, based on the second schedule information.

According to an example, when the TWT function is activated in the electronic device 600, the electronic device 600 may generate third schedule information in a manner of converting TWT parameters contained in the second schedule information. The third schedule information may include parameters that configure an interval where NAN communication is not performed, and the electronic device 600 may generate the third schedule information by converting TWT parameters into parameters related to an unaligned window (ULW).

The interval where short-range wireless communication is activated by the TWT function may be substantially identical to the interval (ULW) where NAN communication is not performed, or the interval where short-range wireless communication is activated by the TWT function may be included in the interval (ULW) where NAN communication is not performed.

The electronic device 600 may determine the starting time of the second interval 522 based on the Target Wake Time, which indicates the activation time of data transmission and/or reception, among the TWT parameters. Alternatively, the electronic device 600 may convert the Target Wake Time, which indicates the activation time of data transmission and/or reception, among the TWT parameters into the starting time of the second interval 522. The unit (64 bits) of the TWT and the unit (32 bits) of the starting time of the second interval 522 may be different from each other, and the electronic device 600 may consider different units when converting the Target Wake Time into the starting time of the second interval 522. For example, the electronic device 600 may determine the value (e.g., remainder) obtained by dividing the Target Wake Time by 232 (or through a modular operation) as the duration of the second interval 522.

The electronic device 600 may determine the duration of the second interval 522 based on the TWT duration, indicating an interval where data transmission and/or reception can be performed, among the TWT parameters. Alternatively, the electronic device 600 may convert the TWT duration, indicating an interval where data transmission and/or reception can be performed, among the TWT parameters, into the duration of the second interval 522. The unit (256 µs) used to configure the TWT parameter and the unit (1 µs) used to configure the ULW may be different, and the electronic device 600 may consider different units when converting the TWT duration into the duration of the second interval 522. For example, by multiplying the TWT duration by 256 µs, the electronic device 600 may convert it into the duration of the second interval 522.

The electronic device 600 may determine the period (or interval) of the second interval 522 based on the TWT wake interval, which indicates the interval between the activation time and the next activation time of data transmission and/or reception, among the TWT parameters. The electronic device 600 may determine the duration of the TWT wake interval based on a parameter (e.g., TWT wake interval mantissa, TWT wake interval exponent) related to the TWT wake interval, and may determine the period of the second interval 522 based on the duration of the TWT wake interval. The duration of the TWT wake interval may be substantially equal to the period of the second interval 522, but the units used to express it may be different. According to an example, the duration of the TWT wake interval may be expressed as 64 bits, and the duration of the ULW may be expressed as 32 bits. The electronic device 600 may consider different units when converting the TWT wake interval into the period of the second interval 522. For example, the electronic device 600 may determine a value (e.g., remainder) obtained by dividing the target wake interval by 232 (or through a modular operation) as the period of the second interval 522.

The electronic device 600 may determine a value indicating whether to repeat short-range wireless communication in the second interval 522, based on a value indicating whether to repeat the TWT function among the TWT parameters (e.g., if the value indicating whether to repeat the TWT function is 1, it indicates to repeat the TWT function; if the value indicating whether to repeat the TWT function is 0, it indicates to perform the TWT function only a specified number of times and to release the TWT function after the specified number of times). If the value indicating whether to repeat the TWT function among the TWT parameters is a value (e.g., 1) indicating to repeat the TWT function, the electronic device 600 may configure the value indicating whether to repeat short-range wireless communication in the second interval 522 to a value (e.g., 255) indicating to repeat short-range wireless communication.

If the value indicating whether the TWT function is repeated among the TWT parameters is a value (e.g., 0) indicating that the TWT function is terminated after a specified number of times, the electronic device 600 may configure the value indicating whether to repeat the short-range wireless communication in the second interval 522 to a value (e.g., 1) indicating that the short-range wireless communication is terminated after a specified number of times.

In operation 718, the electronic device 600 may transmit the third schedule information to the second external electronic device 703.

The electronic device 600 may perform NAN communication and/or short-range wireless communication according to the third schedule information generated based on the second schedule information. The electronic device 600 may control the communication circuit 610 to transmit the third schedule information to the second external electronic device 703. By transmitting the third schedule information to the second external electronic device 703, the electronic device 600 may allow the electronic device 600 and the second external electronic device 703 to perform NAN communication in a partial interval of the second interval 522 where short-range wireless communication is deactivated.

In operation 719, the electronic device 600 and the second external electronic device 703 may perform NAN communication based on the third schedule information.

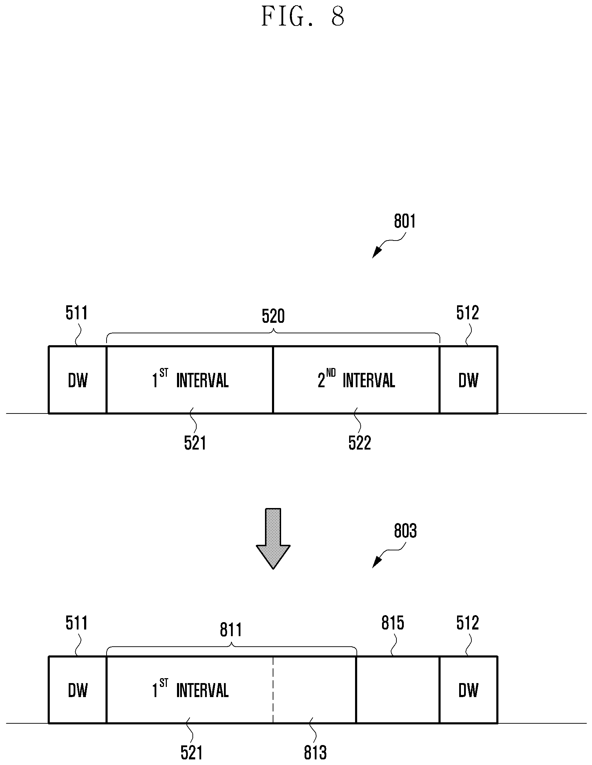

FIG. 8 is a diagram illustrating an example in which an electronic device performs NAN communication based on third schedule information for NAN communication in a part of a second interval available for short-range wireless communication, in response to activation of a TWT function of short-range wireless communication, according to an embodiment.

With reference to FIG. 8, illustrated are an example 801 in which an electronic device (e.g., the electronic device 600 in FIG. 6) performs NAN communication and/or short-range wireless communication based on first schedule information and an example 803 in which the electronic device 600 performs NAN communication and/or short-range wireless communication based on third schedule information.

The first schedule information may include schedule information related to discovery windows 511 and 512. The schedule information related to the discovery windows 511 and 512 may include at least one of the duration (or length) of the discovery windows 511 and 512, the starting time of the discovery windows 511 and 512, and the period of the discovery windows 511 and 512. The electronic device 600 may perform NAN communication with the second external electronic device 703 based on first schedule information.

The first schedule information may include schedule information related to NAN communication to be performed in a partial interval between the discovery windows 511 and 512 as well as schedule information related to the discovery windows 511 and 512. According to an example, the electronic device 600 may be configured to exchange configuration information (e.g., NAN availability attribute or further available window (FAW) attribute) for performing NAN communication in a first interval (e.g., the first interval 521 in FIG. 5A), which is at least a partial interval of an interval (e.g., the interval 520 in FIG. 5A) between the discovery windows 511 and 512, and to perform NAN communication in the first interval 521 through negotiation. The first interval 521 may be referred to as a further available window (FAW), considering that it is an additional interval where NAN communication is available, other than the discovery windows 511 and 512 defined in the NAN cluster. The configuration information for NAN communication may include at least one of information indicating a frequency band (e.g., 2.4 GHz, 5 GHz, 6 GHz) of the NAN communication performed in the first interval 521, channel information of the NAN communication performed in the first interval 521, a starting time of the first interval 521 (e.g., start offset), a duration of the first interval 521, and a period of the first interval 521.

The electronic device 600 may perform short-range wireless communication (e.g., Wi-Fi, Wi-Fi direct, and/or Hotspot) in a second interval (e.g., the second interval 522 in FIG. 5B), which is an interval other than the first interval 521 within the interval 520 between the discovery windows 511 and 512. For example, the electronic device 600 may perform a series of operations for performing short-range wireless communication other than NAN communication in the second interval 522, which is at least a partial interval of the interval 520 between the discovery windows 511 and 512. The second interval 522 is at least a part of an interval excluding the first interval 521 and the discovery windows 511 and 512 defined in the NAN cluster, and it may be referred to as an unaligned window (ULW) considering the characteristic of performing short-range wireless communication other than NAN communication between the discovery windows 511 and 512.

According as a function (e.g., TWT function) for deactivating short-range wireless communication in a partial interval 813 of the second interval 522 is enabled, the electronic device 600 may generate third schedule information based on the second schedule information, and perform NAN communication and short-range wireless communication based on the third schedule information.

With reference to 803, the electronic device 600 may be configured to perform NAN communication in an interval 811, which includes both the first interval 521 and the interval 813 (configured not to perform short-range wireless communication) of the second interval 522, and to perform short-range wireless communication in an interval 815 of the second interval 522 excluding the interval 813 configured not to perform short-range wireless communication.

As denoted by 801, the electronic device 600 may perform NAN communication in the discovery windows 511 and 512 and the first interval 521, and as denoted by 803, the electronic device 600 may perform NAN communication in the discovery windows 511 and 512, the first interval 521, and the interval 813 of the second interval 522 configured not to perform short-range wireless communication. That is, the electronic device 600 may have an increased interval where NAN communication can be performed, thus improving the performance of NAN communication.

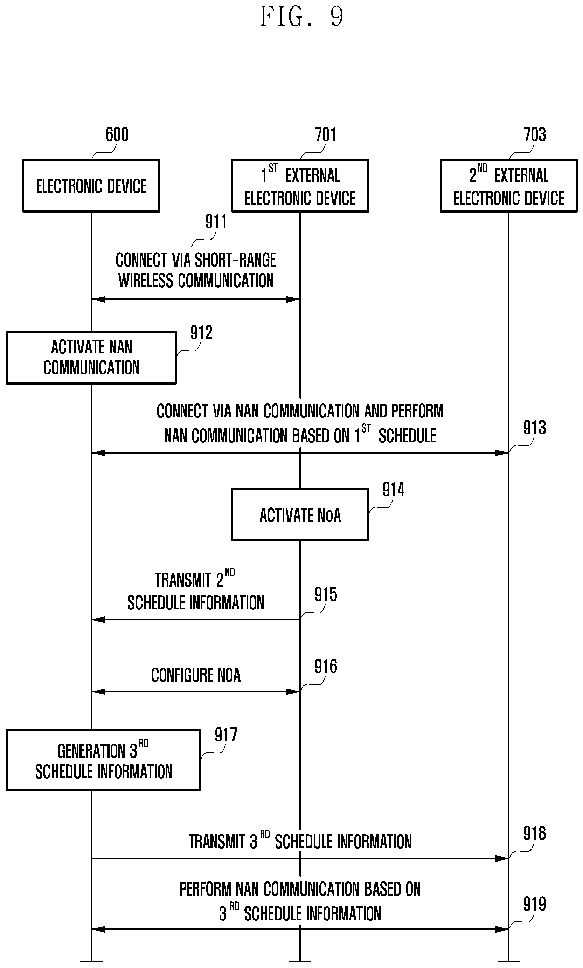

FIG. 9 is a diagram illustrating an example in which an electronic device generates schedule information for performing NAN communication in a part of a second interval available for short-range wireless communication, in response to activation of a notice of absence (NoA) function of short-range wireless communication, according to an embodiment.

In operation 911, an electronic device (e.g., the electronic device 600 in FIG. 6) may be connected to a first external electronic device 701 (e.g., the electronic device 102 in FIG. 1) via short-range wireless communication.

By being connected to the first external electronic device (e.g., the electronic device 102 in FIG. 1) via short-range wireless communication, the electronic device 600 may control the communication circuit 610 to transmit data to the first external electronic device 701 via short-range wireless communication and to receive data from the first external electronic device 701 via short-range wireless communication.

In operation 912, the electronic device 600 may activate NAN communication.

The electronic device 600 may activate NAN communication for various reasons (e.g., activation of an application using NAN communication, reception of user input to perform NAN communication).

In a state of being connected to the first external electronic device 701 via short-range wireless communication, the electronic device 600 may be connected to a second external electronic device (e.g., the electronic device 210, 220, 230, or 240 in FIG. 2) via neighbor awareness network (NAN) communication.

Upon activation of NAN communication, the electronic device 600 may join a pre-created NAN cluster (e.g., the NAN cluster 200 in FIG. 2) or create a new cluster (e.g., the NAN cluster 200 in FIG. 2).

The electronic device 600 may perform synchronization with the NAN cluster 200 based on NAN cluster information contained in a signal broadcast by the second external electronic device 703 included in the NAN cluster 200 (or network). Alternatively, the electronic device 600 may receive NAN cluster information through a non-NAN-based communication scheme (e.g., short-range wireless communication including Bluetooth or Wi-Fi). For example, the electronic device 600 may transmit a probe request signal to find the second external electronic device 703 to be connected via Wi-Fi, and perform NAN cluster synchronization based on NAN cluster information contained in a probe response message transmitted by the second external electronic device 703 in response to the probe request signal.

The NAN cluster synchronization may include an operation of receiving time clock information of an electronic device representing a NAN cluster (or a master device of the NAN cluster) (e.g., the first electronic device 410 in FIG. 4) so that electronic devices included in the NAN cluster 200 transmit and/or receive data through the same channel and/or during the same time. For example, the electronic device 600 may receive a beacon broadcast by the second external electronic device 703 and perform NAN cluster synchronization based on the time clock information of the second external electronic device 703 contained in the beacon.

After the NAN cluster synchronization is completed, the electronic device 600 may activate the communication circuit 610 for each designated interval (e.g., a discovery window such as the discovery window 511, 512, or 513 in FIG. 5A) and control the communication circuit 610 to perform NAN communication for each designated section. The NAN communication may refer to receiving data transmitted by the second external electronic device 703 included in the NAN cluster 200 or transmitting data to the second external electronic device 703.

In operation 913, the electronic device 600 and the second external electronic device 703 (e.g., the electronic device 210, 220, 230, or 240 in FIG. 2) may be connected to each other through NAN communication and perform NAN communication based on first schedule information.

After the NAN cluster synchronization process or the synchronization of the NAN cluster is completed, the electronic device 600 may receive first schedule information related to NAN communication from the second external electronic device 703.

The first schedule information may include schedule information related to discovery windows 511, 512, and 513. The schedule information related to the discovery windows 511, 512, and 513 may include at least one of the duration (or length) of the discovery window 511, 512, or 513, the starting time of the discovery window 511, 512, or 513, and the period of the discovery window 511, 512, or 513. The electronic device 600 may perform NAN communication with the second external electronic device 703 based on the first schedule information.

The first schedule information may include schedule information related to NAN communication to be performed in a partial interval between the discovery windows 511, 512, and 513 as well as schedule information related to the discovery windows 511, 512, and 513. According to an example, the electronic device 600 may be configured to exchange configuration information (e.g., NAN availability attribute or further available window (FAW) attribute) for performing NAN communication in a first interval (e.g., the first interval 521 in FIG. 5A), which is at least a partial interval of an interval (e.g., the interval 520 in FIG. 5A) between the discovery windows 511, 512, and 513, and to perform NAN communication in the first interval 521 through negotiation. The first interval 521 may be referred to as a further available window (FAW), considering that it is an additional interval where NAN communication is available, other than the discovery windows 511, 512, and 513 defined in the NAN cluster. The configuration information for NAN communication may include at least one of information indicating a frequency band (e.g., 2.4 GHz, 5 GHz, 6 GHz) of the NAN communication performed in the first interval 521, channel information of the NAN communication performed in the first interval 521, a starting time of the first interval 521 (e.g., start offset), a duration of the first interval 521, and a period of the first interval 521.

The electronic device 600 may negotiate with the second external electronic device 703 so that the interval (or time) for data transmission and/or reception with the first external electronic device 701 through short-range wireless communication does not overlap with the discovery windows 511, 512, and 513. In addition, the electronic device 600 may negotiate with the second external electronic device 703 so that the interval (or time) for data transmission and/or reception with the first external electronic device 701 through short-range wireless communication does not overlap with the first interval 521, which is a partial interval of the interval 520 between the discovery windows 511, 512, and 513.

The electronic device 600 may perform short-range wireless communication (e.g., Wi-Fi, Wi-Fi direct, and/or Hotspot) in a second interval (e.g., the second interval 522 in FIG. 5B), which is an interval other than the first interval 521 within the interval 520 between the discovery windows 511, 512, and 513. For example, the electronic device 600 may perform a series of operations for performing short-range wireless communication other than NAN communication in the second interval 522, which is at least a partial interval of the interval 520 between the discovery windows 511, 512, and 513. The second interval 522 is at least a part of an interval excluding the first interval 521 and the discovery windows 511, 512, and 513 defined in the NAN cluster, and it may be referred to as an unaligned window (ULW) considering the characteristic of performing short-range wireless communication other than NAN communication between the discovery windows 511, 512, and 513.

To perform short-range wireless communication in the second interval 522, the electronic device 600 may perform an operation of configuring not to perform NAN communication in the second interval 522.

The electronic device 600 may exchange configuration information (e.g., unaligned schedule attribute) for performing short-range wireless communication (or configuration information for not performing NAN communication) in the second interval 522, which is at least a part of the interval 520 between the discovery windows 511, 512, and 513, and may configure not to perform NAN communication in the second interval 522 (or to be able to perform short-range wireless communication in the second interval 522) through negotiation using the configuration information. The configuration information for performing short-range wireless communication may include at least one of information indicating a frequency band (e.g., 2.4 GHz, 5 GHz, 6 GHz) of short-range wireless communication performed in the second interval 522, channel information of short-range wireless communication performed in the second interval 522, a starting time of the second interval 522 (e.g., a starting time field of the unaligned schedule attribute), a duration of the second interval 522 (e.g., a duration field of the unaligned schedule attribute), and a period of the second interval 522 (e.g., a period field of the unaligned schedule attribute).

Through the above-described process, the electronic device 600 may control the communication circuit 610 to exchange data with the second external electronic device 703 through NAN communication in the discovery windows 511, 512, and 513 and the first interval 521, and may control the communication circuit 610 to exchange data with the first external electronic device 701 through short-range wireless communication in the second interval 522. According to an example, a schedule for the electronic device 600 to perform NAN communication and short-range wireless communication may be implemented similarly to FIG. 5B. The schedule illustrated in FIG. 5B is an example, and the first interval 521 and the second interval 522 may be configured to exist between the discovery windows 511, 512, and 513.

The electronic device 600 may perform NAN communication with the second external electronic device 703 (or control the communication circuit 610), based on first schedule information related to at least one discovery window 511, 512, or 513 configured in the NAN cluster 200 to which the electronic device 600 belongs (or includes the electronic device 600) and the first interval 521 configured between the discovery windows 511, 512, and 513, and it may transmit and/or receive data with the first external electronic device 701 via short-range wireless communication in the second interval 522 configured between the discovery windows 511, 512, and 513.

In operation 914, the first external electronic device 701 may activate a NoA function.

The NoA function is a function to deactivate short-range wireless communication in a specific interval. By switching short-range wireless communication to an inactive state during a time configured as a NoA interval, the electronic device 600 supporting the NoA function may reduce power consumed in performing short-range wireless communication.

According to an example, the electronic device 600 may deactivate short-range wireless communication in a partial interval of the second interval 522 upon receiving NoA function activation information indicating that the first external electronic device 701 connected via short-range wireless communication activates the NoA function.

In operation 915, the first external electronic device 701 may transmit second schedule information to the electronic device 600.

In the process of activating the function (e.g., NoA function) for deactivating short-range wireless communication in partial intervals 532 and 533 of the second interval 522, the electronic device 600 may receive second schedule information related to the function (e.g., NoA function) for deactivating short-range wireless communication in the partial intervals 532 and 533 of the second interval 522 from the first external electronic device 701.

The second schedule information may refer to schedule information for performing short-range wireless communication. According to an example, when the function (e.g., NoA function) for deactivating short-range wireless communication in partial intervals 532 and 533 of the second interval 522 is activated, the second schedule information may contain parameters related to a section in which short-range wireless communication is activated. According to an example, the second schedule information may include at least one NoA parameter, and the NoA parameter may include a parameter indicating a starting time of an interval where short-range wireless communication is deactivated, a parameter indicating a duration of an interval where short-range wireless communication is deactivated, a parameter indicating a period of an interval where short-range wireless communication is deactivated, and/or a parameter indicating whether the NoA function is repeated.

In operation 916, the electronic device 600 and the first external electronic device 701 may configure the NoA function based on the second schedule information.

The electronic device 600 and the first external electronic device 701 may change some parameters related to the NoA function through negotiation related to the activation of the NoA function.

In operation 917, the electronic device 600 may generate third schedule information based on the second schedule information.

The electronic device 600 may generate third schedule information for performing NAN communication in an interval (e.g., 532, 533) where short-range wireless communication is disabled, based on the second schedule information.

According to an example, when the NoA function is activated in the electronic device 600, the electronic device 600 may generate third schedule information in a manner of converting NoA parameters contained in the second schedule information. The third schedule information may include parameters that configure an interval where NAN communication is not performed, and the electronic device 600 may generate the third schedule information by converting NoA parameters into parameters related to an unaligned window (ULW).

The interval where short-range wireless communication is activated by the NoA function may be substantially identical to the interval (ULW) where NAN communication is not performed, or the interval where short-range wireless communication is activated by the NoA function may be included in the interval (ULW) where NAN communication is not performed.

The electronic device 600 may determine the period (or interval) of the first interval 521 based on a parameter indicating the period (or interval) of the interval during which short-range wireless communication is deactivated among the NoA parameters. The period of the interval during which short-range wireless communication is deactivated may be substantially equal to the period of the first interval 521. The electronic device 600 may determine the period of the interval during which short-range wireless communication is deactivated as the period of the first interval 521.

The electronic device 600 may determine the duration of the first interval 521 based on a parameter indicating the duration of the interval during which short-range wireless communication is deactivated among the NoA parameters. The duration of the interval during which short-range wireless communication is deactivated may be substantially equal to the value obtained by subtracting the duration of the second interval 522, which is the interval during which short-range wireless communication is activated, from the duration between the discovery windows 511, 512, and 513 (or the period of the interval during which short-range wireless communication is disabled). The electronic device 600 may determine the duration of the second interval 522 by subtracting the duration of the first interval 521, which is the interval during which short-range wireless communication is deactivated, from the duration between the discovery windows 511, 512, and 513 (or the period of the interval during which short-range wireless communication is deactivated).

The electronic device 600 may determine the starting time of the second interval 522 based on a parameter indicating the starting time of the interval during which short-range wireless communication is deactivated among the NoA parameters. The starting time of the second interval 522 may be substantially equal to the starting time of the interval during which short-range wireless communication is deactivated (e.g., the starting time of the discovery window 511, 512, or 513) plus the duration of the interval during which short-range wireless communication is deactivated. The electronic device 600 may determine the starting time of the second interval 522 by adding the duration of the interval during which short-range wireless communication is deactivated to the starting time of the interval during which short-range wireless communication is disabled.

The electronic device 600 may determine a value indicating whether to repeat short-range wireless communication in the second interval 522, based on a parameter indicating whether the NoA function is repeated (e.g., if the parameter is 0, it indicates that the NoA function is repeated; if the parameter is a value other than 0, it indicates that the NoA function is repeated for a different number of times), among the NoA parameters.

If the value, among the NoA parameters, indicating whether the NoA function is repeated is a value (e.g., 0) indicating that the NoA function is repeated, the electronic device 600 may configure the value indicating whether short-range wireless communication is repeated in the second interval 522 to a value (e.g., 255) indicating that short-range wireless communication is repeated.

In operation 918, the electronic device 600 may transmit the third schedule information to the second external electronic device 703.

The electronic device 600 may perform NAN communication and/or short-range wireless communication according to the third schedule information generated based on the second schedule information. The electronic device 600 may control the communication circuit 610 to transmit the third schedule information to the second external electronic device 703. By transmitting the third schedule information to the second external electronic device 703, the electronic device 600 may allow the electronic device 600 and the second external electronic device 703 to perform NAN communication in a partial interval of the second interval 522 where short-range wireless communication is deactivated.

In operation 919, the electronic device 600 and the second external electronic device 703 may perform NAN communication based on the third schedule information.

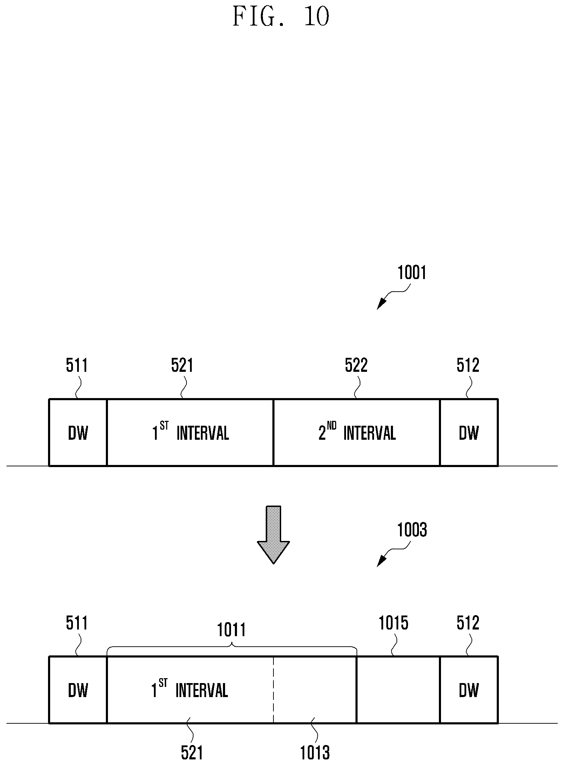

FIG. 10 is a diagram illustrating an example in which an electronic device performs NAN communication based on third schedule information for NAN communication in a part of a second interval available for short-range wireless communication, in response to activation of a NoA function of short-range wireless communication, according to an embodiment.

With reference to FIG. 10, illustrated are an example 1001 in which an electronic device (e.g., the electronic device 600 in FIG. 6) performs NAN communication and/or short-range wireless communication based on first schedule information and an example 1003 in which the electronic device 600 performs NAN communication and/or short-range wireless communication based on third schedule information.

The first schedule information may include schedule information related to discovery windows 511, 512 and 513. The schedule information related to the discovery windows 511, 512 and 513 may include at least one of the duration (or length) of the discovery windows 511, 512 and 513, the starting time of the discovery windows 511, 512 and 513, and the period of the discovery windows 511, 512 and 513. The electronic device 600 may perform NAN communication with the second external electronic device 703 based on first schedule information.

The first schedule information may include schedule information related to NAN communication to be performed in a partial interval between the discovery windows 511, 512 and 513 as well as schedule information related to the discovery windows 511, 512 and 513. According to an example, the electronic device 600 may be configured to exchange configuration information (e.g., NAN availability attribute or further available window (FAW) attribute) for performing NAN communication in a first interval (e.g., the first interval 521 in FIG. 5A), which is at least a partial interval of an interval (e.g., the interval 520 in FIG. 5A) between the discovery windows 511, 512 and 513, and to perform NAN communication in the first interval 521 through negotiation. The first interval 521 may be referred to as a further available window (FAW), considering that it is an additional interval where NAN communication is available, other than the discovery windows 511, 512 and 513 defined in the NAN cluster. The configuration information for NAN communication may include at least one of information indicating a frequency band (e.g., 2.4 GHz, 5 GHz, 6 GHz) of the NAN communication performed in the first interval 521, channel information of the NAN communication performed in the first interval 521, a starting time of the first interval 521 (e.g., start offset), a duration of the first interval 521, and a period of the first interval 521.

The electronic device 600 may perform short-range wireless communication (e.g., Wi-Fi, Wi-Fi direct, and/or Hotspot) in a second interval (e.g., the second interval 522 in FIG. 5B), which is an interval other than the first interval 521 within the interval 520 between the discovery windows 511, 512 and 513. For example, the electronic device 600 may perform a series of operations for performing short-range wireless communication other than NAN communication in the second interval 522, which is at least a partial interval of the interval 520 between the discovery windows 511, 512 and 513. The second interval 522 is at least a part of an interval excluding the first interval 521 and the discovery windows 511, 512 and 513 defined in the NAN cluster, and it may be referred to as an unaligned window (ULW) considering the characteristic of performing short-range wireless communication other than NAN communication between the discovery windows 511, 512 and 513.

According as a function (e.g., NoA function) for deactivating short-range wireless communication in a partial interval 1013 of the second interval 522 is enabled, the electronic device 600 may generate third schedule information based on the second schedule information, and perform NAN communication and short-range wireless communication based on the third schedule information.

With reference to 1003, the electronic device 600 may be configured to perform NAN communication in an interval 811, which includes both the first interval 521 and the interval 1013 (configured not to perform short-range wireless communication) of the second interval 522, and to perform short-range wireless communication in an interval 1015 of the second interval 522 excluding the interval 1013 configured not to perform short-range wireless communication.

As denoted by 1001, the electronic device 600 may perform NAN communication in the discovery windows 511, 512 and 513 and the first interval 521, and as denoted by 1003, the electronic device 600 may perform NAN communication in the discovery windows 511, 512 and 513, the first interval 521, and the interval 1013 of the second interval 522 configured not to perform short-range wireless communication. That is, the electronic device 600 may have an increased interval where NAN communication can be performed, thus improving the performance of NAN communication.

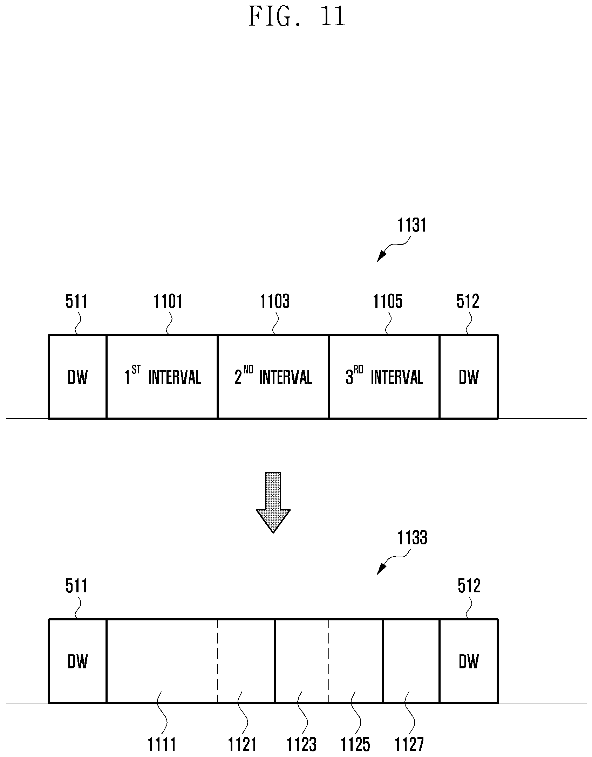

FIG. 11 is a diagram illustrating an example in which an electronic device performs NAN communication based on third schedule information for NAN communication in a part of a second interval available for short-range wireless communication, in response to activation of TWT function and NoA function of short-range wireless communication, according to an embodiment.

In the previous examples, the electronic device (e.g., the electronic device 600 in FIG. 6) is described in a situation of simultaneously using two types of wireless communication including NAN communication and short-range wireless communication. However, the electronic device 600 according to the disclosure is not limited to two types of wireless communication and may be expanded and applied to multiple types of wireless communication. Hereinafter, scheduling in the case where the electronic device 600 supports three types of short-range wireless communication (e.g., NAN communication, Wi-Fi, and Wi-Fi direct) will be described.

With reference to FIG. 11, illustrated are an example 1101 in which the electronic device 600 performs NAN communication, Wi-Fi, and Wi-Fi direct based on first schedule information and an example 1003 in which the electronic device 600 performs NAN communication, Wi-Fi, and Wi-Fi direct based on third schedule information.

The first schedule information may include schedule information related to discovery windows 511, 512 and 513. The schedule information related to the discovery windows 511, 512 and 513may include at least one of the duration (or length) of the discovery windows 511, 512 and 513, the starting time of the discovery windows 511, 512 and 513, and the period of the discovery windows 511, 512 and 513. The electronic device 600 may perform NAN communication with the second external electronic device 703 based on first schedule information.

The first schedule information may include schedule information related to NAN communication to be performed in a partial interval between the discovery windows 511, 512 and 513 as well as schedule information related to the discovery windows 511, 512 and 513. According to an example, the electronic device 600 may be configured to exchange configuration information (e.g., NAN availability attribute or further available window (FAW) attribute) for performing NAN communication in a first interval 1101 (e.g., the first interval 521 in FIG. 5A), which is at least a partial interval of an interval (e.g., the interval 520 in FIG. 5A) between the discovery windows 511, 512 and 513, and to perform NAN communication in the first interval 1101 through negotiation. The first interval 1101 may be referred to as a further available window (FAW), considering that it is an additional interval where NAN communication is available, other than the discovery windows 511, 512 and 513 defined in the NAN cluster. The configuration information for NAN communication may include at least one of information indicating a frequency band (e.g., 2.4 GHz, 5 GHz, 6 GHz) of the NAN communication performed in the first interval 1101, channel information of the NAN communication performed in the first interval 1101, a starting time of the first interval 1101 (e.g., start offset), a duration of the first interval 1101, and a period of the first interval 1101.

The electronic device 600 may perform short-range wireless communication (e.g., Wi-Fi) in a second interval 1103 (e.g., the second interval 522 in FIG. 5B), which is an interval other than the first interval 1101 within the interval between the discovery windows 511, 512 and 513. For example, the electronic device 600 may perform a series of operations for performing short-range wireless communication other than NAN communication in the second interval 1103, which is at least a partial interval of the interval between the discovery windows 511, 512 and 513. The second interval 1103 is at least a part of an interval excluding the first interval 1101 and the discovery windows 511, 512 and 513 defined in the NAN cluster, and it may be referred to as an unaligned window (ULW) considering the characteristic of performing short-range wireless communication other than NAN communication between the discovery windows 511, 512 and 513.

The electronic device 600 may perform another short-range wireless communication (e.g., Wi-Fi direct) in a third interval 1105, which is an interval other than the first interval 1101 and the second interval 1103 within the interval between the discovery windows 511, 512 and 513. For example, the electronic device 600 may perform a series of operations for performing another short-range wireless communication in the third interval 1105, which is at least a partial interval of the interval between the discovery windows 511, 512 and 513. The third interval 1105 is at least a part of the interval between the discovery windows 511, 512 and 513 defined in the NAN cluster, excluding the first interval 1101 and the second interval 1103, and it may be referred to as an unaligned window (ULW) in consideration of the characteristic of performing another short-range wireless communication between the discovery windows 511, 512 and 513.

The electronic device 600 may generate (or receive) first schedule information that enables the electronic device 600 to perform short-range wireless communication in the second interval 1103 and perform another short-range wireless communication in the third interval 1105, and it may operate according to the first schedule information.

According as a function (e.g., TWT function) for deactivating short-range wireless communication in a partial interval 1121 of the second interval 1103 and/or a function (e.g., NoA function) for deactivating short-range wireless communication in a partial interval 1127 of the third interval 1105 is activated, the electronic device 600 may generate third schedule information based on the second schedule information and perform NAN communication, short-range wireless communication, and/or another short-range wireless communication based on the third schedule information.

With reference to 1133, the electronic device 600 may be configured to perform NAN communication in an interval covering the first interval 1111 and an interval 1121 of the second interval 1103 configured not to perform short-range wireless communication and in an interval 1127 of the third interval 1105 configured not to perform short-range wireless communication, to perform short-range wireless communication in an interval 1123 of the second interval 1103 excluding the interval 1121 configured not to perform short-range wireless communication, and to perform short-range wireless communication in an interval 1125 of the third interval 1105 excluding the interval 1127 configured not to perform short-range wireless communication.

As denoted by 1131, the electronic device 600 may perform NAN communication in the discovery windows 511, 512 and 513 and the first interval 1101, and as denoted by 1133, the electronic device 600 may perform NAN communication in the discovery windows 511, 512 and 513, the first interval 1101, the interval 1121 of the second interval 1103 configured not to perform short-range wireless communication, and the interval 1127 of the third interval 1105 configured not to perform short-range wireless communication. That is, the electronic device 600 may have an increased interval where NAN communication can be performed, thus improving the performance of NAN communication.

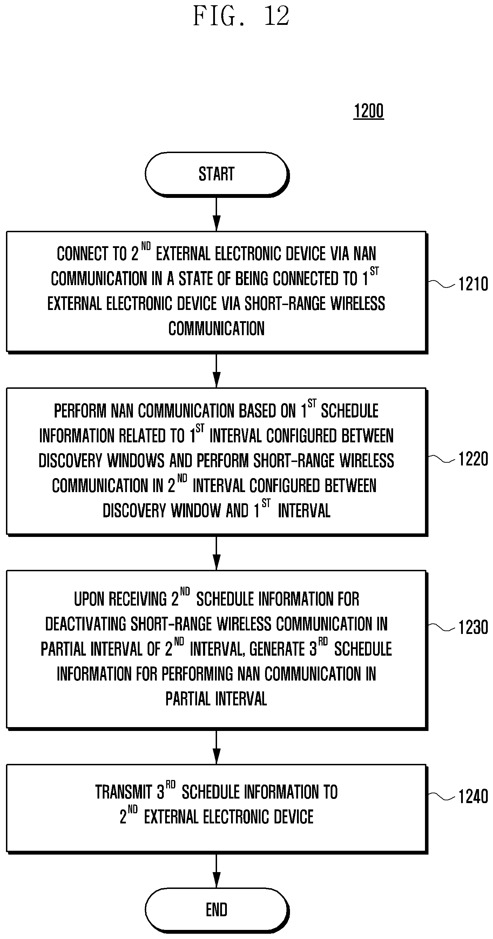

FIG. 12 is a flowchart 1200 illustrating an operating method of an electronic device, according to an embodiment.

In operation 1210, an electronic device (e.g., the electronic device 600 in FIG. 6) may be connected to a second external electronic device (e.g., the second external electronic device 703 in FIG. 7) via neighbor awareness network (NAN) communication, in a state of being connected to a first external electronic device (e.g., the first external electronic device 701 in FIG. 7) via short-range wireless communication.

In a state of being connected to the first external electronic device 701 via short-range wireless communication, the electronic device 600 may be connected to the second external electronic device 703 via NAN communication.

Upon activation of NAN communication, the electronic device 600 may join a pre-created NAN cluster (e.g., the NAN cluster 200 in FIG. 2) or create a new cluster (e.g., the NAN cluster 200 in FIG. 2).

The electronic device 600 may perform synchronization with the NAN cluster 200 based on NAN cluster information contained in a signal broadcast by the second external electronic device 703 included in the NAN cluster 200 (or network). Alternatively, the electronic device 600 may receive NAN cluster information through a non-NAN-based communication scheme (e.g., short-range wireless communication including Bluetooth or Wi-Fi). For example, the electronic device 600 may transmit a probe request signal to find the second external electronic device 703 to be connected via Wi-Fi, and perform NAN cluster synchronization based on NAN cluster information contained in a probe response message transmitted by the second external electronic device 703 in response to the probe request signal.

The NAN cluster synchronization may include an operation of receiving time clock information of an electronic device representing a NAN cluster (or a master device of the NAN cluster) (e.g., the first electronic device 410 in FIG. 4) so that electronic devices included in the NAN cluster 200 transmit and/or receive data through the same channel and/or during the same time. For example, the electronic device 600 may receive a beacon broadcast by the second external electronic device 703 and perform NAN cluster synchronization based on the time clock information of the second external electronic device 703 contained in the beacon.

After the NAN cluster synchronization is completed, the electronic device 600 may activate the communication circuit 610 for each designated interval (e.g., a discovery window such as the discovery window 511, 512, or 513 in FIG. 5A) and control the communication circuit 610 to perform NAN communication for each designated section. The NAN communication may refer to receiving data transmitted by the second external electronic device 703 included in the NAN cluster 200 or transmitting data to the second external electronic device 703.

In operation 1220, the electronic device 600 may perform NAN communication based on first schedule information related to a first interval 521 configured between the discovery windows 511, 512 and 513, and perform short-range wireless communication in a second interval 522 configured between the discovery window 511, 512 or 513 and the first interval 521.

After the NAN cluster synchronization process or the synchronization of the NAN cluster is completed, the electronic device 600 may receive first schedule information related to NAN communication from the second external electronic device 703.

The first schedule information may include schedule information related to discovery windows 511, 512, and 513. The schedule information related to the discovery windows 511, 512, and 513 may include at least one of the duration (or length) of the discovery window 511, 512, or 513, the starting time of the discovery window 511, 512, or 513, and the period of the discovery window 511, 512, or 513. The electronic device 600 may perform NAN communication with the second external electronic device 703 based on the first schedule information.

The first schedule information may include schedule information related to NAN communication to be performed in a partial interval between the discovery windows 511, 512, and 513 as well as schedule information related to the discovery windows 511, 512, and 513. According to an example, the electronic device 600 may be configured to exchange configuration information (e.g., NAN availability attribute or further available window (FAW) attribute) for performing NAN communication in a first interval (e.g., the first interval 521 in FIG. 5A), which is at least a partial interval of an interval (e.g., the interval 520 in FIG. 5A) between the discovery windows 511, 512, and 513, and to perform NAN communication in the first interval 521 through negotiation. The first interval 521 may be referred to as a further available window (FAW), considering that it is an additional interval where NAN communication is available, other than the discovery windows 511, 512, and 513 defined in the NAN cluster. The configuration information for NAN communication may include at least one of information indicating a frequency band (e.g., 2.4 GHz, 5 GHz, 6 GHz) of the NAN communication performed in the first interval 521, channel information of the NAN communication performed in the first interval 521, a starting time of the first interval 521 (e.g., start offset), a duration of the first interval 521, and a period of the first interval 521.

The electronic device 600 may negotiate with the second external electronic device 703 so that the interval (or time) for data transmission and/or reception with the first external electronic device 701 through short-range wireless communication does not overlap with the discovery windows 511, 512, and 513. In addition, the electronic device 600 may negotiate with the second external electronic device 703 so that the interval (or time) for data transmission and/or reception with the first external electronic device 701 through short-range wireless communication does not overlap with the first interval 521, which is a partial interval of the interval 520 between the discovery windows 511, 512, and 513.

The electronic device 600 may perform short-range wireless communication (e.g., Wi-Fi, Wi-Fi direct, and/or Hotspot) in a second interval (e.g., the second interval 522 in FIG. 5B), which is an interval other than the first interval 521 within the interval 520 between the discovery windows 511, 512, and 513. For example, the electronic device 600 may perform a series of operations for performing short-range wireless communication other than NAN communication in the second interval 522, which is at least a partial interval of the interval 520 between the discovery windows 511, 512, and 513. The second interval 522 is at least a part of an interval excluding the first interval 521 and the discovery windows 511, 512, and 513 defined in the NAN cluster, and it may be referred to as an unaligned window (ULW) considering the characteristic of performing short-range wireless communication other than NAN communication between the discovery windows 511, 512, and 513.

To perform short-range wireless communication in the second interval 522, the electronic device 600 may perform an operation of configuring not to perform NAN communication in the second interval 522.

The electronic device 600 may exchange configuration information (e.g., unaligned schedule attribute) for performing short-range wireless communication (or configuration information for not performing NAN communication) in the second interval 522, which is at least a part of the interval 520 between the discovery windows 511, 512, and 513, and may configure not to perform NAN communication in the second interval 522 (or to be able to perform short-range wireless communication in the second interval 522) through negotiation using the configuration information. The configuration information for performing short-range wireless communication may include at least one of information indicating a frequency band (e.g., 2.4 GHz, 5 GHz, 6 GHz) of short-range wireless communication performed in the second interval 522, channel information of short-range wireless communication performed in the second interval 522, a starting time of the second interval 522 (e.g., a starting time field of the unaligned schedule attribute), a duration of the second interval 522 (e.g., a duration field of the unaligned schedule attribute), and a period of the second interval 522 (e.g., a period field of the unaligned schedule attribute).

Through the above-described process, the electronic device 600 may control the communication circuit 610 to exchange data with the second external electronic device 703 through NAN communication in the discovery windows 511, 512, and 513 and the first interval 521, and may control the communication circuit 610 to exchange data with the first external electronic device 701 through short-range wireless communication in the second interval 522. According to an example, a schedule for the electronic device 600 to perform NAN communication and short-range wireless communication may be implemented similarly to FIG. 5B. The schedule illustrated in FIG. 5B is an example, and the first interval 521 and the second interval 522 may be configured to exist between the discovery windows 511, 512, and 513.

The electronic device 600 may perform NAN communication with the second external electronic device 703 (or control the communication circuit 610), based on first schedule information related to at least one discovery window 511, 512, or 513 configured in the NAN cluster 200 to which the electronic device 600 belongs (or includes the electronic device 600) and the first interval 521 configured between the discovery windows 511, 512, and 513, and it may transmit and/or receive data with the first external electronic device 701 via short-range wireless communication in the second interval 522 configured between the discovery windows 511, 512, and 513.

In operation 1230, upon receiving second schedule information for deactivating short-range wireless communication in a partial interval (e.g., 815 in FIG. 8 or 1015 in FIG. 10) of the second interval 522, the electronic device 600 may generate third schedule information for performing NAN communication in the partial interval 815 or 1015.

The electronic device 600 performing short-range wireless communication in the second interval 522 may support a function (e.g., target wake time (TWT)) for activating short-range wireless communication in at least a partial interval (e.g., 531 in FIG. 5C) of the second interval 522 or a function (e.g., notice of absence (NoA)) for deactivating short-range wireless communication in the first interval 521. For various reasons, the electronic device 600 may activate the function (e.g., TWT function) for activating short-range wireless communication in a partial interval 531 of the second interval 522 or the function (e.g., NoA function) for deactivating short-range wireless communication in the first interval 521.

TWT is a function proposed and implemented in IEEE 802.11 ax (or Wi-Fi 6). The electronic device 620 supporting TWT may transmit and/or receive data through short-range wireless communication during a specified time, and by switching the communication circuit 610 that supports short-range wireless communication to an idle state (or an inactive state) during other times excluding the specified time, it may reduce power consumed in performing short-range wireless communication.

The NoA function is a function to deactivate short-range wireless communication during a specific interval. The electronic device 600 supporting the NoA function may reduce power consumption in short-range wireless communication by switching short-range wireless communication to an inactive state during a time period configured as a NoA interval.

According to an example, the electronic device 600 may deactivate short-range wireless communication in a partial interval of the second interval 522 upon receiving TWT function activation information indicating that the first external electronic device 701 connected via short-range wireless communication activates the TWT function.

According as the function (e.g., TWT function, NoA function) for deactivating short-range wireless communication in partial intervals 532 and 533 of the second interval 522 is enabled, the electronic device 600 may perform a series of operations for performing NAN communication in the partial intervals 532 and 533.

In the process of activating the function (e.g., TWT function, NoA function) for deactivating short-range wireless communication in partial intervals 532 and 533 of the second interval 522, the electronic device 600 may receive second schedule information related to the function (e.g., TWT function, NoA function) for deactivating short-range wireless communication in the partial intervals 532 and 533 of the second interval 522 from the first external electronic device 701.

The second schedule information may refer to schedule information for performing short-range wireless communication. According to an example, when the function (e.g., TWT function) for deactivating short-range wireless communication in partial intervals 532 and 533 of the second interval 522 is activated, the second schedule information may contain parameters related to a section in which short-range wireless communication is activated. According to an example, the second schedule information may include at least one TWT parameter, and the second schedule information may include at least one of a Target Wake Time indicating an activation time of data transmission and/or reception, a TWT duration (or TWT service period (SP)) indicating a section where data transmission and/or reception can be performed, and/or a TWT wake interval indicating an interval between an activation time of data transmission and/or reception and a next activation time of data transmission and/or reception.

The electronic device 600 may generate third schedule information for performing NAN communication in an interval (e.g., 532, 533) where short-range wireless communication is disabled, based on the second schedule information.

According to an example, when the TWT function is activated in the electronic device 600, the electronic device 600 may generate third schedule information in a manner of converting TWT parameters contained in the second schedule information. The third schedule information may include parameters that configure an interval where NAN communication is not performed, and the electronic device 600 may generate the third schedule information by converting TWT parameters into parameters related to an unaligned window (ULW).

The interval where short-range wireless communication is activated by the TWT function may be substantially identical to the interval (ULW) where NAN communication is not performed, or the interval where short-range wireless communication is activated by the TWT function may be included in the interval (ULW) where NAN communication is not performed.

The electronic device 600 may determine the starting time of the second interval 522 based on the Target Wake Time, which indicates the activation time of data transmission and/or reception, among the TWT parameters. Alternatively, the electronic device 600 may convert the Target Wake Time, which indicates the activation time of data transmission and/or reception, among the TWT parameters into the starting time of the second interval 522. The unit (64 bits) of the TWT and the unit (32 bits) of the starting time of the second interval 522 may be different from each other, and the electronic device 600 may consider different units when converting the Target Wake Time into the starting time of the second interval 522. For example, the electronic device 600 may determine the value (e.g., remainder) obtained by dividing the Target Wake Time by 232 (or through a modular operation) as the duration of the second interval 522.

The electronic device 600 may determine the duration of the second interval 522 based on the TWT duration, indicating an interval where data transmission and/or reception can be performed, among the TWT parameters. Alternatively, the electronic device 600 may convert the TWT duration, indicating an interval where data transmission and/or reception can be performed, among the TWT parameters, into the duration of the second interval 522. The unit (256 µs) used to configure the TWT parameter and the unit (1 µs) used to configure the ULW may be different, and the electronic device 600 may consider different units when converting the TWT duration into the duration of the second interval 522. For example, by multiplying the TWT duration by 256 µs, the electronic device 600 may convert it into the duration of the second interval 522.

The electronic device 600 may determine the period (or interval) of the second interval 522 based on the TWT wake interval, which indicates the interval between the activation time and the next activation time of data transmission and/or reception, among the TWT parameters. The electronic device 600 may determine the duration of the TWT wake interval based on a parameter (e.g., TWT wake interval mantissa, TWT wake interval exponent) related to the TWT wake interval, and may determine the period of the second interval 522 based on the duration of the TWT wake interval. The duration of the TWT wake interval may be substantially equal to the period of the second interval 522, but the units used to express it may be different. According to an example, the duration of the TWT wake interval may be expressed as 64 bits, and the duration of the ULW may be expressed as 32 bits. The electronic device 600 may consider different units when converting the TWT wake interval into the period of the second interval 522. For example, the electronic device 600 may determine a value (e.g., remainder) obtained by dividing the target wake interval by 232 (or through a modular operation) as the period of the second interval 522.

The electronic device 600 may determine a value indicating whether to repeat short-range wireless communication in the second interval 522, based on a value indicating whether to repeat the TWT function among the TWT parameters (e.g., if the value indicating whether to repeat the TWT function is 1, it indicates to repeat the TWT function; if the value indicating whether to repeat the TWT function is 0, it indicates to perform the TWT function only a specified number of times and to release the TWT function after the specified number of times). If the value indicating whether to repeat the TWT function among the TWT parameters is a value (e.g., 1) indicating to repeat the TWT function, the electronic device 600 may configure the value indicating whether to repeat short-range wireless communication in the second interval 522 to a value (e.g., 255) indicating to repeat short-range wireless communication.

If the value indicating whether the TWT function is repeated among the TWT parameters is a value (e.g., 0) indicating that the TWT function is terminated after a specified number of times, the electronic device 600 may configure the value indicating whether to repeat the short-range wireless communication in the second interval 522 to a value (e.g., 1) indicating that the short-range wireless communication is terminated after a specified number of times.

According to an example, the second schedule information may include parameters related to an interval where short-range wireless communication is deactivated, if the function (e.g., NoA function) for deactivating short-range wireless communication in partial intervals 532 and 533 of the second interval 522 is activated.

According to an example, the second schedule information may include at least one NoA parameter, and the NoA parameter may include a parameter indicating a starting time of an interval where which short-range wireless communication is deactivated, a parameter indicating a duration of an interval where short-range wireless communication is deactivated, a parameter indicating a period of an interval where short-range wireless communication is deactivated, and/or a parameter indicating whether the NoA function is repeated.

The electronic device 600 may determine the period (or interval) of the first interval 521 based on a parameter indicating the period (or interval) of the interval during which short-range wireless communication is deactivated among the NoA parameters. The period of the interval during which short-range wireless communication is deactivated may be substantially equal to the period of the first interval 521. The electronic device 600 may determine the period of the interval during which short-range wireless communication is deactivated as the period of the first interval 521.

The electronic device 600 may determine the duration of the first interval 521 based on a parameter indicating the duration of the interval during which short-range wireless communication is deactivated among the NoA parameters. The duration of the interval during which short-range wireless communication is deactivated may be substantially equal to the value obtained by subtracting the duration of the second interval 522, which is the interval during which short-range wireless communication is activated, from the duration between the discovery windows 511, 512, and 513 (or the period of the interval during which short-range wireless communication is disabled). The electronic device 600 may determine the duration of the second interval 522 by subtracting the duration of the first interval 521, which is the interval during which short-range wireless communication is deactivated, from the duration between the discovery windows 511, 512, and 513 (or the period of the interval during which short-range wireless communication is deactivated).

The electronic device 600 may determine the starting time of the second interval 522 based on a parameter indicating the starting time of the interval during which short-range wireless communication is deactivated among the NoA parameters. The starting time of the second interval 522 may be substantially equal to the starting time of the interval during which short-range wireless communication is deactivated (e.g., the starting time of the discovery window 511) plus the duration of the interval during which short-range wireless communication is deactivated. The electronic device 600 may determine the starting time of the second interval 522 by adding the duration of the interval during which short-range wireless communication is deactivated to the starting time of the interval during which short-range wireless communication is disabled.

The electronic device 600 may determine a value indicating whether to repeat short-range wireless communication in the second interval 522, based on a parameter indicating whether the NoA function is repeated (e.g., if the parameter is 0, it indicates that the NoA function is repeated; if the parameter is a value other than 0, it indicates that the NoA function is repeated for a different number of times), among the NoA parameters.

If the value, among the NoA parameters, indicating whether the NoA function is repeated is a value (e.g., 0) indicating that the NoA function is repeated, the electronic device 600 may configure the value indicating whether short-range wireless communication is repeated in the second interval 522 to a value (e.g., 255) indicating that short-range wireless communication is repeated.

In operation 1240, the electronic device 600 may transmit the third schedule information to the second external electronic device 703.

The electronic device 600 may perform NAN communication and/or short-range wireless communication according to the third schedule information generated based on the second schedule information. The electronic device 600 may control the communication circuit 610 to transmit the third schedule information to the second external electronic device 703. By transmitting the third schedule information to the second external electronic device 703, the electronic device 600 may allow the electronic device 600 and the second external electronic device 703 to perform NAN communication in a partial interval of the second interval 522 where short-range wireless communication is deactivated.

When a function (e.g., TWT function) that activates short-range wireless communication in at least a partial interval (e.g., 531 in FIG. 5C) of the second interval 522 or a function (e.g., NoA function) that deactivates short-range wireless communication in the first interval 521 is deactivated, the electronic device 600 may perform NAN communication in the discovery windows 511, 512, and 513 and the first interval 521, and perform short-range wireless communication in the second interval 522.

An electronic device (e.g., the electronic device 600 in FIG. 6) according to an example may include a communication circuit (e.g., the communication circuit 610 in FIG. 6) supporting short-range wireless communication and neighbor awareness network (NAN) communication. The electronic device 600 may include a processor 620. The processor 620 may perform a connection with a second external electronic device 703 via the NAN communication in a state of being connected to a first external electronic device 701 via the short-range wireless communication. The processor 620 may, based on first schedule information related to a first interval 521 configured between at least one discovery window configured in a NAN cluster to which the electronic device belongs, perform the NAN communication with the second external electronic device and the short-range wireless communication with the first external electronic device in a second interval 522 configured between the at least one discovery window and the first interval. Upon receiving second schedule information for the short-range wireless communication that deactivates the short-range wireless communication in a partial interval 813 of the second interval 522, the processor 620 may generate third schedule information for performing the NAN communication in the partial interval 813 based on the second schedule information. The processor 620 may transmit the third schedule information to the second external electronic device 703.

In the electronic device 600 according to an example, the third schedule information may enable the second external electronic device 703 and the electronic device 600 to perform the NAN communication in the partial interval of the second interval 522.

In the electronic device 600 according to an example, the processor 620 may be configured to perform the NAN communication in the first interval 521 and the partial interval of the second interval 522, and to perform the short-range wireless communication in other interval of the second interval 522 excluding the partial interval.

In the electronic device 600 according to an example, the second schedule information may include at least one parameter related to a target wake time (TWT) supported by the electronic device 600 and the first external electronic device 701.

In the electronic device 600 according to an example, the processor 620 may be configured to generate the third schedule information by converting the at least one parameter related to the TWT into a parameter related to the NAN communication.

In the electronic device 600 according to an example, the processor 620 may be configured to generate the third schedule information so that the electronic device 600 and the first external electronic device 701 perform the NAN communication in an interval including an interval where the short-range wireless communication is not performed.

In the electronic device 600 according to an example, the second schedule information may include at least one parameter related to a notice of absence (NoA) supported by the electronic device 600 and the first external electronic device 701.

In the electronic device 600 according to an example, the processor 620 may be configured to generate the third schedule information by converting the at least one parameter related to the NoA into a parameter related to the NAN communication.

In the electronic device 600 according to an example, the processor 620 may be configured to generate the third schedule information so that the electronic device 600 and the first external electronic device 701 perform the NAN communication in an interval including an interval where the short-range wireless communication is not performed.

In the electronic device 600 according to an example, the processor 620 may be configured to perform the NAN communication based on the first schedule information when the short-range wireless communication is terminated.

An operating method of an electronic device (e.g., the electronic device 600 in FIG. 6) may include performing a connection with a second external electronic device 703 via a neighbor awareness network (NAN) communication in a state of being connected to a first external electronic device 701 via a short-range wireless communication. The operating method of the electronic device 600 may include, based on first schedule information related to a first interval 521 configured between at least one discovery window configured in a NAN cluster to which the electronic device 600 belongs, performing the NAN communication with the second external electronic device 703 and the short-range wireless communication with the first external electronic device 701 in a second interval 522 configured between the at least one discovery window and the first interval. The operating method of the electronic device 600 may include, upon receiving second schedule information for the short-range wireless communication that deactivates the short-range wireless communication in a partial interval of the second interval 522, generating third schedule information for performing the NAN communication in the partial interval based on the second schedule information. The operating method of the electronic device 600 may include transmitting the third schedule information to the second external electronic device 703.

In the operating method of the electronic device 600 according to an example, the third schedule information may enable the second external electronic device 703 and the electronic device 600 to perform the NAN communication in the partial interval of the second interval 522.

The operating method of the electronic device 600 according to an example may further include performing the NAN communication in the first interval 521 and the partial interval of the second interval 522, and performing the short-range wireless communication in other interval of the second interval 522 excluding the partial interval.

In the operating method of the electronic device 600 according to an example, the second schedule information may include at least one parameter related to a target wake time (TWT) supported by the electronic device 600 and the first external electronic device 701.

In the operating method of the electronic device 600 according to an example, generating third schedule information may include generating the third schedule information by converting the at least one parameter related to the TWT into a parameter related to the NAN communication.

The operating method of the electronic device 600 according to an example may further include that the electronic device 600 and the first external electronic device 701 perform the NAN communication in an interval including an interval where the short-range wireless communication is not performed.

In the operating method of the electronic device 600 according to an example, the second schedule information may include at least one parameter related to a notice of absence (NoA) supported by the electronic device 600 and the first external electronic device 701.

In the operating method of the electronic device 600 according to an example, generating third schedule information may include generating the third schedule information by converting the at least one parameter related to the NoA into a parameter related to the NAN communication.

The operating method of the electronic device 600 according to an example may further include generating the third schedule information so that the electronic device 600 and the first external electronic device 701 perform the NAN communication in an interval including an interval where the short-range wireless communication is not performed.

The operating method of the electronic device 600 according to an example may further include performing the NAN communication based on the first schedule information when the short-range wireless communication is terminated.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (600) comprising:
a communication circuit (610) supporting short-range wireless communication and neighbor awareness network (NAN) communication; and
a processor (620) configured to:
perform a connection with a second external electronic device (703) via the NAN communication in a state of being connected to a first external electronic device (701) via the short-range wireless communication,
based on first schedule information related to a first interval (521) configured between at least one discovery window configured in a NAN cluster to which the electronic device belongs, perform the NAN communication with the second external electronic device and the short-range wireless communication with the first external electronic device in a second interval (522) configured between the at least one discovery window and the first interval,
upon receiving second schedule information for the short-range wireless communication that deactivates the short-range wireless communication in a partial interval (813) of the second interval (522), generate third schedule information for performing the NAN communication in the partial interval (813) based on the second schedule information, and
transmit the third schedule information to the second external electronic device.

2. The electronic device of claim 1, wherein the third schedule information enables the second external electronic device and the electronic device to perform the NAN communication in the partial interval of the second interval.

3. The electronic device of claim 1, wherein the processor is configured to perform the NAN communication in the first interval and the partial interval of the second interval, and to perform the short-range wireless communication in other interval of the second interval excluding the partial interval.

4. The electronic device of claim 1, wherein the second schedule information includes at least one parameter related to a target wake time (TWT) supported by the electronic device and the first external electronic device.

5. The electronic device of claim 4, wherein the processor is configured to generate the third schedule information by converting the at least one parameter related to the TWT into a parameter related to the NAN communication.

6. The electronic device of claim 4, wherein the processor is configured to generate the third schedule information so that the electronic device and the first external electronic device perform the NAN communication in an interval including an interval where the short-range wireless communication is not performed.

7. The electronic device of claim 1, wherein the second schedule information includes at least one parameter related to a notice of absence (NoA) supported by the electronic device and the first external electronic device.

8. The electronic device of claim 7, wherein the processor is configured to generate the third schedule information by converting the at least one parameter related to the NoA into a parameter related to the NAN communication.

9. The electronic device of claim 7, wherein the processor is configured to generate the third schedule information so that the electronic device and the first external electronic device perform the NAN communication in an interval including an interval where the short-range wireless communication is not performed.

10. The electronic device of claim 1, wherein the processor is configured to perform the NAN communication based on the first schedule information when the short-range wireless communication is terminated.

11. An operating method of an electronic device, the method comprising:
performing a connection with a second external electronic device via a neighbor awareness network (NAN) communication in a state of being connected to a first external electronic device via a short-range wireless communication;
based on first schedule information related to a first interval configured between at least one discovery window configured in a NAN cluster to which the electronic device belongs, performing the NAN communication with the second external electronic device and the short-range wireless communication with the first external electronic device in a second interval configured between the at least one discovery window and the first interval;
upon receiving second schedule information for the short-range wireless communication that deactivates the short-range wireless communication in a partial interval of the second interval, generating third schedule information for performing the NAN communication in the partial interval based on the second schedule information; and
transmitting the third schedule information to the second external electronic device.

12. The method of claim 11, wherein the third schedule information enables the second external electronic device and the electronic device to perform the NAN communication in the partial interval of the second interval.

13. The method of claim 11, further comprising:
performing the NAN communication in the first interval and the partial interval of the second interval, and performing the short-range wireless communication in other interval of the second interval excluding the partial interval.

14. The method of claim 11, wherein the second schedule information includes at least one parameter related to a target wake time (TWT) supported by the electronic device and the first external electronic device.

15. The method of claim 14, wherein generating third schedule information includes generating the third schedule information by converting the at least one parameter related to the TWT into a parameter related to the NAN communication.
